# FASCICULE DE BREVET EUROPEEN

(11) **EP 3 659 070 B1**
(45) Date de publication et mention de la délivrance du brevet: **23.06.2021**
(21) Numéro de dépôt: 18749465.3
(22) Date de dépôt: 12.07.2018
(51) Int. Cl.: G06K 19/06, G06K 19/14, G07D 7/20, G07D 7/2033, G07D 7/0043, G07D 7/202

(54) **PROCÉDÉ POUR L'AUTHENTIFICATION D'UNE ILLUSTRATION.**
VERFAHREN ZUR AUTHENTIFIZIERUNG EINER ILLUSTRATION
METHOD FOR AUTHENTICATING AN ILLUSTRATION

(30) Priorité: 24.07.2017 FR 1757021
(43) Date de publication de la demande: 03.06.2020
(73) Titulaire: SURYS, 77607 Marne-la-Vallée Cedex 3 (FR)
(72) Inventeur: PIC, Marc, 92100 Boulogne Billancourt (FR); OUDDAN, Mohammed Amine, 94170 Le Perreux sur Marne (FR); SOUPARIS, Hugues, 75012 Paris (FR)
(74) Mandataire: Bouvier, Thibault
(86) Numéro de dépôt international: PCT/FR2018/051761
(87) Numéro de publication internationale: WO 2019/020893

(56) Documents cités:
- EP-A1- 2 581 860
- EP-A1- 2 743 893
- EP-A1- 2 937 819
- DE-A1- 2 759 270
- US-A1- 2014 267 369

## Description

### DOMAINE DE L'INVENTION

La présente invention concerne le domaine de l'authentification d'une illustration.

Par illustration, on entend toute représentation graphique non uniforme ; par exemple une peinture, un dessin, une photographie, etc.

Par souci de concision, le cas où l'illustration est une photographie, en particulier un portrait, sera essentiellement décrit ici.

Dans ce contexte, la présente invention trouve une application particulière dans le domaine de la vérification de documents d'identité, typiquement les documents d'identité officiels (carte d'identité, passeport, permis de conduire, etc.) ou non officiels (carte d'abonnement, etc.), où l'illustration est une photographie du porteur de document d'identité.

En effet, la falsification de documents d'identité porte principalement sur le remplacement de la photo d'identité. Si pendant longtemps ce remplacement pouvait être assez succinct, il s'est complexifié ces dernières années avec l'utilisation d'images « morphées ».

Par image « morphée », on entend l'image résultant d'une transformation morphologique ou *morphing*, entre la photographie originale du porteur légitime du document d'identité et celle d'un fraudeur qui souhaite utiliser ce document d'identité.

Pour un fraudeur, le document d'identité subissant la manipulation est par exemple choisi de sorte à ce que le porteur légitime partage un certain nombre de traits morphologiques avec le fraudeur. Cette ressemblance morphologique entre le porteur légitime et le fraudeur facilite le travail du faussaire qui imprime ce morphing sur le document d'identité (en conservant les autres éléments de sécurité intacts), ce qui permet de tromper un contrôle visuel et parfois même automatique, tout en restant visuellement compatible avec les autres éléments de sécurité du document d'identité qui font écho à la photographie, comme par exemple une image fantôme, une image par perçage de trous, etc.

L'objectif de la présente invention vise donc à assurer que l'illustration, dans ce cas la photographie présente sur le document d'identité, est l'originale, c'est-à-dire qu'elle n'a pas été manipulée d'une manière ou d'une autre. Il s'agit donc d'authentifier l'illustration, par exemple comme elle devait être au jour de la fabrication du document d'identité. Elle peut en outre servir à authentifier le porteur du document ou le sujet de la photographie. En ce sens, la présente invention traite de photométrie et non de biométrie.

Elle s'applique bien évidemment au domaine de la sécurité, comme au domaine de l'art.

Dans le domaine de la sécurité, il est connu le document US2015/0332136 qui vise à sécuriser une photographie d'identité en entourant celle-ci d'un code-barres 2D, le code-barres 2D étant basé sur des données alphanumériques.

La présente invention vise à proposer une solution alternative et plus sécurisée.

La demande de brevet européen EP 2 937 819 A1 décrit un système gérant un code d'informations bidimensionnel muni d'une zone d'enregistrement de données et d'une zone d'image. Ledit système est muni d'une unité d'acquisition d'informations personnalisées servant à acquérir des informations personnalisées concernant un sujet ou un objet en tant qu'informations enregistrées dans la zone d'enregistrement de données ou en tant qu'informations associées aux informations enregistrées dans la zone d'enregistrement de données. De plus, ce système est muni d'une unité d'acquisition d'image unique servant à acquérir une image unique du sujet ou de l'objet, ou une image unique qui identifie le sujet ou l'objet, en tant qu'informations exprimées dans la zone d'image.

La demande de brevet européen EP 2 743 893 A1 décrit un procédé de sécurisation d'un document comportant des informations imprimées, appelées informations de référence, ce procédé consistant à:
- signer la représentation numérique desdites informations de référence par une clé cryptographique pour obtenir des informations signées ;
- constituer un ensemble d'informations incluant les informations signées ;
- convertir l'ensemble d'informations en un premier code lisible par une machine ;
- imprimer le premier code sur le document.

### RESUME DE L'INVENTION

Plus précisément, l'invention concerne selon un premier de ses objets, un procédé d'encodage d'une illustration source en couleurs, comprenant des étapes consistant à :
- inscrire ladite illustration source sous forme d'une illustration inscrite en niveaux de gris ou en couleur,
- encoder un message sous la forme d'un code-barres à deux dimensions comprenant un ensemble de blocs, chaque bloc codant un fragment dudit message et comprenant un ensemble de (M) lignes et (N) colonnes, et chaque bloc comprenant un ensemble de sous-blocs codants, chaque sous-bloc comprenant un ensemble d'éléments binaires.

Il est essentiellement caractérisé en ce que l'étape d'encodage comprend des étapes préalables consistant à :
- définir ou identifier un ensemble de points remarquables sur l'illustration source,
- calculer un ensemble d'attributs en fonction de certains au moins des points remarquables dudit ensemble,

- sélectionner, parmi l'ensemble des attributs calculés, un ensemble d'au moins un attribut permettant de définir une empreinte numérique,
- optionnellement compresser ladite empreinte numérique,
- optionnellement signer ladite empreinte numérique au moyen d'une signature cryptographique, et
- enregistrer dans le message l'un parmi :
   - un ensemble d'au moins un attribut,
   - l'empreinte numérique,
   - l'empreinte numérique compressée,
   - l'empreinte numérique signée non compressée et
   - l'empreinte numérique compressée et signée ; et
une étape consistant à :
- encoder au moins certaines informations de couleur de l'illustration source dans ledit code-barres à deux dimensions.

Dans un mode de réalisation, on prévoit en outre au moins l'une des étapes consistant à :
- inscrire ledit code-barres à deux dimensions sur un support de destination ;
- solidariser ladite illustration inscrite et ledit support de destination ;
- rendre le code-barres à deux dimensions solidaire de l'illustration inscrite ; et
- disposer le code-barres à deux dimensions de manière prédéfinie par rapport à l'illustration inscrite, optionnellement en encadrant ladite illustration inscrite.

Grâce à cette caractéristique, il est possible, comme décrit ultérieurement, de scanner par exemple avec un objet communicant toutes les informations utiles à la vérification simultanément.

Dans un mode de réalisation, chaque bloc codant comprend en outre un ensemble de sous-blocs non-codants dont la position est prédéfinie, le procédé comprenant en outre, pour chaque bloc codant, des étapes consistant à :
- sélectionner un ensemble prédéfini de sous-blocs codants,
- encoder sur un ensemble d'au moins un sous-bloc non-codant prédéfini le résultat de l'application d'un code correcteur d'erreurs aux valeurs encodées par ledit ensemble prédéfini de sous-blocs codants.

On peut prévoir une étape consistant à :
- numériser l'illustration source si celle-ci n'est pas déjà sous forme numérique ; et
Soit :
- décomposer l'illustration source numérisée en un ensemble de zones, chaque zone étant définie :
   - par une primitive, déterminée par un algorithme de reconnaissance de forme, un algorithme de reconnaissance biométrique ou un gradient de couleur ; ou
   - par un algorithme de détection de contours ; ou
   - par application à l'illustration source d'une grille géométrique statique ayant une forme prédéterminée, optionnellement celle d'un visage, la grille comprenant un ensemble de zones ; et
- associer à chaque zone une couleur ou une information de couleur respective ;
Soit :
- convertir l'illustration source numérisée, éventuellement redimensionnée, dans l'espace Teinte Saturation Valeur comprenant une composante teinte et une composante saturation ; et
- compresser les informations de couleur de l'illustration source dans l'espace des teintes et dans l'espace des saturations par :
- décomposer ladite composante teinte et ladite composante saturation en un ensemble de zones respectives, chaque zone correspondant à un ensemble homogène de pixels dont la teinte, respectivement la saturation, est uniforme ; et
- associer à chaque zone une teinte et une saturation respective et les enregistrer dans un dictionnaire.

On peut prévoir que l'étape de sélection d'un ensemble d'au moins un attribut permettant de définir une empreinte numérique comprend une étape consistant à sélectionner un nombre d'attributs supérieurs à une valeur seuil enregistrée dans une mémoire

On peut prévoir au moins l'une des étapes parmi :
- ajouter à l'empreinte numérique des données extrinsèques à l'illustration source ;
- sélectionner un nombre d'attributs supérieurs à une valeur seuil enregistrée dans une mémoire parmi l'ensemble d'attributs calculés ; et
- encoder au moins certaines couleurs ou informations de couleur de l'illustration source sous forme de métadonnées dudit code-barres.

On peut prévoir au moins l'une des étapes consistant à, pour chaque bloc :
- disposer les sous-blocs codants et les sous-blocs non-codants de sorte que :
   o au moins une ligne du bloc comprend un ensemble de sous-blocs codants adjacents deux à deux, ledit ensemble étant entouré d'un ensemble de sous-blocs non-codants, et
   o au moins une colonne du bloc comprend un ensemble de sous-blocs codants adjacents deux à deux, ledit ensemble étant entouré d'un ensemble de sous-blocs non-codants ; et
- disposer les sous-blocs codants et les sous-blocs non-codants de sorte que :
   o pour au moins une colonne comprenant un ensemble de sous-blocs codants, chaque sous-bloc non-codant de ladite colonne encode un résultat respectif de l'application d'un code correcteur d'erreurs respectif aux valeurs encodées par ledit ensemble de sous-blocs codants de ladite colonne,
   o pour au moins une ligne comprenant un ensemble de sous-blocs codants, chaque sous-bloc non-codant de ladite ligne encode un résultat respectif de l'application d'un code correcteur d'erreurs respectif aux valeurs encodées par ledit ensemble de sous-blocs codants de ladite ligne.

Selon un autre de ses objets, l'invention concerne un procédé d'authentification d'une illustration inscrite en niveaux de gris ou en couleur, issue d'une illustration source en couleurs, comprenant des étapes consistant à :
- numériser par un capteur optique :
   o une illustration inscrite en niveaux de gris ou en couleur, et
   o un code-barres à deux dimensions encodé selon l'invention, et encodant un message et des métadonnées,
- décoder le message dudit code-barres à deux dimensions, et
- comparer le message décodé et l'illustration inscrite.

On peut prévoir des étapes consistant à :
- sur l'illustration inscrite lue par le capteur optique :
   o définir ou identifier un ensemble de points remarquables sur l'illustration inscrite lue par le capteur optique,
   o recalculer un ensemble d'attributs en fonction de certains au moins des points remarquables dudit ensemble,
   o sélectionner, parmi l'ensemble des attributs recalculés, un ensemble d'au moins un attribut permettant de définir une empreinte numérique,
- comparer la valeur de la différence entre les attributs décodés dudit code-barres à deux dimensions et les attributs recalculés à une valeur seuil prédéterminée enregistrée dans une mémoire, et
- optionnellement vérifier la signature cryptographique.

On peut prévoir en outre des étapes consistant à :
- calculer une illustration reconstruite de l'illustration source par extraction du message ou des métadonnées dudit code-barres à deux dimensions et à partir dudit message extrait ou desdites métadonnées extraites en suivant l'une des séquences d'étapes A, B, C ou D suivantes, consistant à :
   A1. identifier un ensemble de primitives parmi lesdites métadonnées,
   A2. appliquer chaque primitive à l'illustration inscrite numérisée pour recalculer chaque zone sur l'illustration inscrite numérisée et coloriser chaque zone avec sa couleur respective associée ; et
   A3. fusionner lesdites zones colorisées recalculées et l'illustration inscrite numérisée ; ou
   B1. définir un ensemble de zones de l'illustration inscrite numérisée par un algorithme de détection de contours ;
   B2. établir une correspondance unique entre chaque zone de l'illustration source et chaque zone de l'illustration inscrite numérisée;
   B3. colorer chaque zone de l'illustration inscrite numérisée avec la couleur de la zone de l'illustration source correspondante extraite des métadonnées; ou
   C1. définir un ensemble de zones de l'illustration inscrite numérisée par application d'une grille géométrique statique ayant une forme prédéterminée, optionnellement celle d'un visage, à l'illustration inscrite numérisée ;
   C2. établir une correspondance unique entre chaque zone de l'illustration source et chaque zone de l'illustration inscrite numérisée;
   C3. colorer chaque zone de l'illustration inscrite numérisée avec la couleur de la zone de l'illustration source correspondante extraite des métadonnées; ou
   D1. extraire d'un dictionnaire les valeurs de l'ensemble des classes dans l'espace des teintes et dans l'espace des saturations,
   D2. recomposer l'ensemble de zones de l'espace des teintes et de l'espace des saturations par décompression du code-barres à deux dimensions,
   D3. optionnellement redimensionner l'illustration reconstruite dans l'espace des saturations et dans l'espace des teintes aux dimensions de l'illustration inscrite numérisée,
   D4. reconstruire la composante de brillance à partir de l'illustration inscrite numérisée, ou à partir de l'illustration source numérisée,
   D5. calculer les composantes de brillance de teinte et de saturation de l'illustration reconstruite par combinaison de l'ensemble des zones de l'espace des teintes et de l'espace des saturations recomposées à l'étape D2, et la composante de brillance reconstruite à l'étape D4,
   D6. convertir les composantes de brillance de teinte et de saturation en valeurs rouge vert bleu, et
- afficher l'illustration reconstruite sur un écran d'affichage ;
   le procédé comprenant optionnellement en outre une étape de remplissage consistant à appliquer un algorithme de restauration sur l'illustration reconstruite préalablement à l'étape d'affichage.

Enfin, selon un autre de ses objets, l'invention concerne un programme d'ordinateur comprenant des instructions de code de programme pour l'exécution des étapes du procédé selon l'invention, lorsque ledit programme est exécuté sur un ordinateur.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

la figure 1 illustre une illustration source au sens de la présente l'invention, en l'espèce une photographie d'identité,
la figure 2 illustre un mode de réalisation d'un code-barres 2D au sens de la présente l'invention, entourant l'illustration de la figure 1, et comprenant des données extrinsèques au sens de la présente l'invention,
la figure 3 illustre des attributs métriques au sens de la présente l'invention,
la figure 4 illustre un mode de réalisation d'un bloc au sens de la présente l'invention,
la figure 5 illustre l'illustration de la figure 1 après décomposition par primitives en un ensemble de zones, chaque zone étant colorée d'une couleur respective,
la figure 6 illustre une illustration recalculée et colorée à partir du code-barres 2D de la figure 2,
la figure 7 illustre l'image résultante de la fusion entre les zones colorisées recalculées de la figure 6 et l'illustration inscrite de la figure 2 numérisée,
la figure 8 illustre schématiquement une séquence d'encodage de l'illustration de la figure 1 en code-barres 2D dans laquelle chaque zone de l'illustration est définie par une primitive,
la figure 9 illustre le décodage du code-barres 2D de la figure 8 ;
la figure 10 illustre schématiquement une séquence d'encodage de l'illustration de la figure 1 en code-barres 2D dans laquelle chaque zone de l'illustration est définie par une reconnaissance de contours,
la figure 11 illustre le décodage du code-barres 2D de la figure 10 ;
la figure 12A et la figure 12B illustrent la reconstruction d'une illustration par décodage du code-barres 2D encodé avec le portrait original ;
la figure 13A et la figure 13B illustrent la reconstruction d'une illustration par décodage du code-barres 2D encodé avec le portrait original mais pour lesquelles les illustrations ont été interverties ultérieurement à l'encodage du code-barres 2D ;
la figure 14A illustre l'illustration de la figure 1 numérisée dans l'espace des teintes, et
la figure 14B illustre l'illustration de la figure 1 numérisée dans l'espace des saturations.

### DESCRIPTION DETAILLEE

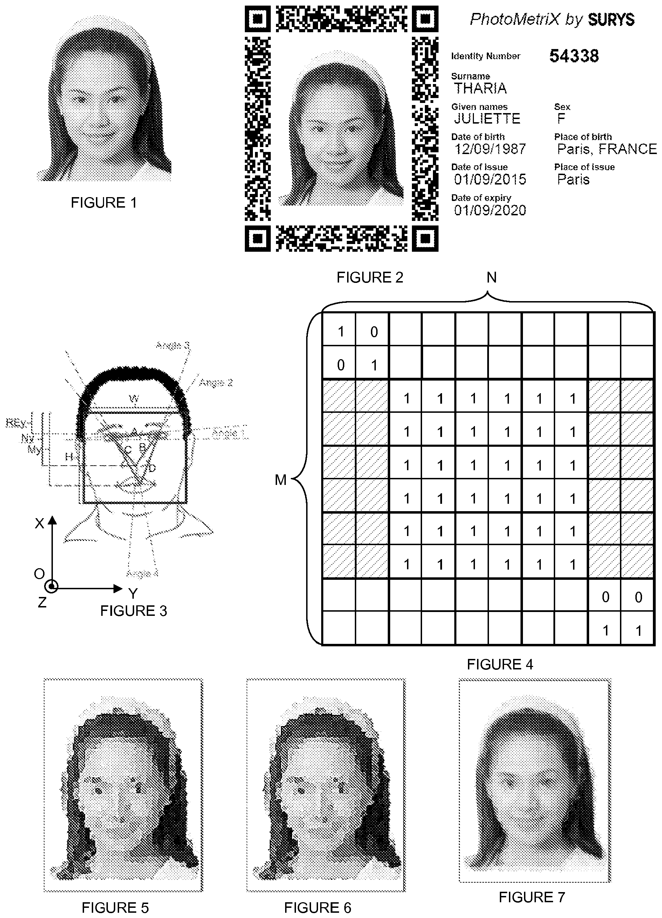

Une illustration source, en couleur, est représentée en figure 1. En l'espèce, l'illustration source et une photographie d'identité, en particulier destinée à un document d'identité.

On prévoit tout d'abord une étape consistant à numériser l'illustration source si celle-ci ne se présente pas déjà sous forme numérique. Par simplification, on entend ci-après indistinctement l'illustration source ou son fichier numérique correspondant.

Pour pouvoir ultérieurement authentifier l'illustration source et vérifier son intégrité, c'est-à-dire sa non-falsification, il est proposé un mécanisme d'encodage décrit ci-dessous.

### Points remarquables

On prévoit une étape consistant à définir, ou identifier, un ensemble de points remarquables sur l'illustration source.

Un point remarquable est défini comme un point de l'illustration source, c'est-à-dire un pixel ou un ensemble de pixels adjacents deux à deux, pour lequel le gradient de contraste, selon une direction et une distance prédéfinies, est supérieur à une valeur seuil prédéfinie.

Par exemple, un point remarquable est un point d'impression d'un caractère alphanumérique ou kanji. Un point remarquable peut également être purement graphique, c'est-à-dire non-alphanumérique, comme par exemple un point de l'iris d'un œil ou un point fixe du support sur lequel l'illustration source est imprimée, par exemple un caractère d'un numéro de série.

Pour une photographie d'une personne, des points remarquables peuvent être par exemple des éléments usuels de biométrie tels que les yeux, le nez, la commissure des lèvres le centre de la bouche, etc.

Plus généralement, des points remarquables peuvent être des éléments graphiques situés dans un environnement aux caractéristiques physiques ou mathématiques (en traitement d'images) particulières, comme par exemple des éléments graphiques autour desquels un gradient intense se forme, ou qui répondent à des critères de traitement d'images tels que les détecteurs de Stephen-Harris. Par gradient « intense », on entend un gradient dont la valeur est supérieure à une valeur seuil.

### Attributs

A partir de l'ensemble de points remarquables, on prévoit une étape consistant à calculer un ensemble d'attributs qui concourent au caractère identifiable, voire unique, de l'illustration source. Les attributs comprennent un ensemble de métriques, c'est-à-dire un ensemble de distances ou angles entre certains points remarquables.

Les attributs comprennent par exemple les coordonnées de points remarquables (par rapport à un repère prédéterminé), les distances entre certains points remarquables, des valeurs de gradient de contraste autour des points remarquables, etc.

La position d'un point remarquable prédéterminé de l'illustration source dans son contexte de représentation (par exemple dans le cadre présenté sur la figure 2), que cette position soit aléatoire ou imposée, peut également être un attribut, par exemple un point remarquable peut être :
- un bord de l'illustration source,
- un repéré calculé biométriquement, comme le centre de gravité des yeux ou de la bouche.

Pour une photographie d'une personne, des attributs peuvent être par exemple des éléments usuels de biométrie tels que des rapports de distance entre les positions des yeux, du nez, de la commissure des lèvres ou du centre de la bouche, ou des angles entre ces mêmes éléments, etc. comme illustré figure 3.

Les attributs peuvent être calculés grâce à des logiciels standards de biométrie pour les illustrations de portraits.

Par exemple, pour une illustration source représentant un portrait, les attributs peuvent être calculés en se basant sur la morphologie du visage (position des yeux, du nez et de la bouche) et sur l'orientation de la tête au moment de la prise de vue (tête droite, légèrement penchée vers la gauche, légèrement penchée vers la droite, etc.).

On peut aussi utiliser l'algorithme dit SIFT pour "Scale Invariant Feature Transform" en anglais, ou l'algorithme dit SURF pour "Speeded Up Robust Features" en anglais, qui sont tous deux des descripteurs locaux qui consistent, dans un premier temps, à détecter un certain nombre de points remarquables dans l'image, pour ensuite calculer un descripteur décrivant localement l'image autour de chaque point remarquable. La qualité du descripteur est mesurée par sa robustesse aux changements possibles que peut subir une image, par exemple un changement d'échelle et une rotation.

Pour l'algorithme SIFT, décrit notamment dans la publication D. Lowe. Object récognition from local scale-invariant features. IEEE International Conférence on Computer Vision, pages 1150-1157, 1999, la détection des points est basée sur les différences des gaussiennes (DoG) obtenues par le calcul de la différence entre chaque couple d'images lissées par un filtre gaussien, en variant à chaque fois le paramètre sigma (c'est à dire la déviation standard) du filtre. Les DoG peuvent être calculé pour différents niveaux d'échelle permettant d'introduire la notion de l'espace d'échelle. La détection des potentielles zones de points d'intérêt / points remarquables s'effectue en recherchant les extrema selon le plan de la dimension de l'image (x,y) et le plan du facteur d'échelle. Ensuite une étape de filtrage est nécessaire pour supprimer les points non pertinents, en éliminant par exemple les points dont le contraste est trop faible.

Le calcul du descripteur SIFT s'effectue sur une zone autour de chaque point d'intérêt par exemple de 16x16 pixels, subdivisée en 4x4 zones de 4x4 pixels. Sur chacune des 16 zones, un histogramme des orientations du gradient basé sur 8 intervalles est alors calculé. La concaténation des 16 histogrammes donne un vecteur descripteur de 128 valeurs.

Pour l'algorithme SURF, décrit notamment dans la publication H. Bay, T. Tuylelaars, and L. Van Gool. Surf : Speeded up robust features. European Conférence on Computer Vision, pages 404-417, 2006, la méthode consiste à utiliser le déterminant de la matrice Hessienne, à calculer une approximation des dérivées secondes des gaussiennes de l'image par le biais de filtres à différentes échelles en utilisant des masques de différentes tailles (par exemple 9x9, 15x15, 21x21, ...). Pour le calcul de l'orientation des points et les descripteurs autour des points, le principe est basé sur les sommes des réponses des ondelettes de Haar horizontales et verticales ainsi que leurs normes. La zone circulaire de description est divisée là encore en 16 régions. Une analyse en ondelettes est effectuée sur chaque région afin de construire le descripteur final. Ce dernier est constitué de la somme des gradients en x et en y ainsi que de la somme de leur norme respective pour l'ensemble des 16 régions. Le vecteur descripteur est ainsi constitué de 64 valeurs qui représentent des propriétés extraites à la fois dans l'espace normal et dans celui des échelles de grandeur.

De préférence, on prévoit une étape consistant à classer les attributs selon un ordre de priorité de vraisemblance, ce qui permet de ne sélectionner que les plus efficaces pour détecter une éventuelle manipulation de l'illustration source.

Par exemple, la distance entre deux yeux d'un être humain adulte est en moyenne de 63 mm, et généralement comprise entre 58 mm et 72mm. Pour une illustration source représentant un portrait, si un attribut calcule que la distance entre les deux yeux est supérieure à une valeur prédéterminée, en l'espèce 8 cm, ou inférieure à une autre valeur prédéterminée, en l'espèce 5 cm, on peut prévoir que cet attribut est rejeté (non sélectionné).

On peut donc prévoir une étape consistant à sélectionner tout ou partie des attributs calculés.

De préférence, on prévoit de sélectionner un nombre d'attributs supérieurs à une valeur seuil enregistrée dans une mémoire. Plus les métriques (nombre d'attributs) sont nombreuses et différentes les unes des autres, plus le taux de confusion diminue.

### Empreinte

L'ensemble des attributs sélectionnés définit une empreinte numérique de l'illustration source.

Une fois les attributs sélectionnés, on peut alors enregistrer ladite empreinte numérique dans une mémoire. En l'espèce, l'empreinte numérique est enregistrée sous forme de vecteur de données dans une mémoire temporaire. Typiquement, le vecteur de données comprend les valeurs des attributs sélectionnés, juxtaposées deux à deux.

On peut aussi prévoir une étape consistant à ajouter à l'empreinte numérique des données extrinsèques à l'illustration source, en particulier des données intrinsèques à l'environnement dont l'illustration source est solidaire.

Par exemple, pour une illustration source telle qu'une photographie dans un environnement tel qu'un document, en particulier un document d'identité, on peut prévoir au moins l'un des ensembles de données parmi :
- des données relatives au porteur dudit document et inscrites dans ledit document, par exemple le nom, le prénom, la taille, la date de naissance du porteur, etc. ; et qui peuvent faciliter le contrôle du document,
- des données relatives audit document, par exemple des informations utiles à l'utilisation dudit document (date de validité, périmètre d'usage,...) de préférence dont l'authenticité est prouvée par la signature cryptographique décrite ultérieurement,
- des métadonnées relatives à l'illustration source, par exemple des métadonnées relatives aux couleurs de l'illustration source, comme décrit ultérieurement ;
- des métadonnées relatives au document, par exemple :
   o une classification, des données provenant de bases de données externes, des conditions d'utilisation, etc. ;
   o une « charge utile » telle qu'une empreinte digitale, l'empreinte de l'iris d'un œil, etc. du porteur du document, représentée sous la forme d'un code de minuties ; ou encore
- la date de création de l'illustration source ou de création du code-barres 2D décrit ci-après.

Par convention, on appelle donc « empreinte » indistinctement l'ensemble d'attributs sélectionnés et l'ensemble d'attributs sélectionnés auxquels sont ajoutées les données extrinsèques à l'illustration source.

### Compression

L'empreinte numérique est ensuite préférentiellement compressée pour ne représenter que quelques octets d'informations.

### Signature

L'empreinte numérique éventuellement compressée est alors signée au moyen d'une signature cryptographique qui permet de prouver que l'ensemble de ces informations ont été émises par une source de confiance.

Avantageusement, on prévoit de signer au moyen d'une signature cryptographique à clef publique, en particulier compacte, de préférence faisant appel à la cryptographie sur des courbes elliptiques, et par exemple selon l'algorithme ECDSA pour *Elliptic Curve Digital Signature Algorithm* en anglais.

Cette signature exploite l'asymétrie entre la clef privée et la clef publique et permet de signer de manière sécurisée l'empreinte numérique, tout en s'assurant :
- d'une part, que personne ne disposant du certificat ne soit en mesure de refaire ladite signature de l'empreinte numérique (et ainsi de pouvoir faire croire que le contenu provient de source de confiance alors qu'il ne l'est pas) ; et
- d'autre part, que chacun puisse vérifier l'authenticité de l'empreinte numérique et de l'identité de son signataire, au moyen d'une clef sans danger fournie par exemple dans une application sur un objet communicant (téléphone, smartphone, tablette, ordinateur portable, etc.) équipé d'un objectif optique et d'un écran d'affichage, ou dans un logiciel ad hoc.

### Code-barres 2D

On prévoit une étape consistant à encoder un message sous la forme d'un code-barres à deux dimensions, dit code-barres 2D, représenté par des pixels.

Le message comprend l'un parmi :
- un ensemble d'au moins un attribut,
- l'empreinte numérique,
- l'empreinte numérique compressée,
- l'empreinte numérique signée non compressée, et
- l'empreinte numérique compressée signée.

On peut également prévoir que le message comprend en outre :
- un ensemble d'au moins un point remarquable à partir duquel les attributs sont calculés, ce qui permet typiquement de ne calculer l'empreinte que sur une partie seulement d'une illustration source.

Le code-barres 2D est ensuite rendu solidaire de l'illustration source, par exemple par impression sur le support de l'illustration source, et en particulier sur une page d'un document d'identité. Le code-barres 2D peut aussi être imprimé sous forme d'étiquette collée au support de l'illustration source. D'autres techniques peuvent être mises en oeuvre, par exemple par gravure ou autre, tant que le code-barres 2D peut être reconnu optiquement.

On prévoit que le code-barres 2D est disposé de manière prédéfinie par rapport à l'illustration source, c'est-à-dire que sa forme est prédéfinie, ses dimensions sont prédéfinies et la position relative entre le code-barres 2D et l'illustration source est également prédéfinie.

Dans le domaine de l'art, si l'illustration source est une peinture, on peut prévoir que le code-barres 2D est imprimé sur le support de la peinture, par exemple une toile, et de préférence caché par le cadre de celle-ci ; si l'illustration source est une sculpture, on peut prévoir que le code-barres 2D est imprimé ou gravé sur le socle de celle-ci.

On peut prévoir que le code-barres 2D encadre l'illustration source, en l'espèce le code-barres 2D présente une forme de cadre polygonal, et plus particulièrement un cadre rectangulaire, comme illustré figure 2, ce qui est avantageux dans le domaine de la sécurité.

De préférence, la position relative de l'illustration et du code-barres 2D encadrant celle-ci comporte un aléa de position et cette position relative est un attribut, ce qui permet de sécuriser encore l'empreinte numérique. En effet, deux illustrations identiques (ou une même illustration source) génèrent un premier et un deuxième code-barres 2D quasi identiques. Mais grâce à l'aléa de position, la position relative du premier code-barres 2D et la position relative du deuxième code-barres 2D est différente. En particulier, l'aléa de position est un aléa prédéterminé et non un aléa mécanique du par exemple à la fabrication.

Ainsi, dans le domaine de la sécurité, il peut arriver qu'un document d'identité soit perdu et que le porteur dudit document perdu fasse faire un nouveau document d'identité avec la même photographie que celle utilisée pour le document d'identité perdu. Dans ce cas, comme la position de la photographie sur le nouveau document d'identité n'est pas exactement à la même position que sur le document d'identité perdu, alors l'attribut correspondant du nouveau document est différent de l'attribut correspondant du document d'identité perdu. Il est ainsi possible de distinguer deux versions (autrement identiques) d'un même document.

Typiquement, le code-barres 2D est construit au sein d'un ensemble d'amers. Ces amers permettent de redresser par traitement des images à la fois l'illustration source et le code-barres 2D. Le nombre d'amers peut-être adapté en fonction de la surface cible sur laquelle l'illustration source est apposée / imprimée / inscrite / collée / affichée / etc. En effet, la surface cible peut être plane mais aussi cylindrique, conique, tronconique, etc. Les éléments à redresser sont inclus dedans pour assurer leur redressement optimal.

Pour une surface cible plane, comme illustré figure 2, on prévoit de préférence trois ou quatre amers qui entourent l'illustration source à sécuriser.

L'encodage permet d'inscrire à l'immédiate proximité de l'illustration source et de manière codée, des éléments de sécurité qui assureront une vérification facile au moyen d'un objet communicant ou d'une caméra (y compris webcam) quelconque.

La proximité immédiate de l'illustration source et du code-barres 2D permet d'assurer une certaine sécurité en ce que l'altération (volontaire ou non) de l'illustration source risque d'endommager le code-barres 2D, et réciproquement. En outre, elle permet que l'illustration source et le code-barres 2D soient lus simultanément par un capteur optique

### Encodage de la redondance

Le code-barres 2D inclut un certain nombre de propriétés de redondance du message pour éviter les difficultés de lecture ultérieure. Une implémentation possible est l'utilisation d'un code correcteur, typiquement l'un des codes parmi :
un Code de Hamming
un Code de Golay
un Code de Reed-Müller
un Code de Goppa
un Code de Xing, et
un code de Reed-Solomon.

Un exemple de méthode d'encodage du code-barres 2D consiste à créer une pluralité de blocs de M lignes x N colonnes d'éléments binaires chacun, avec M et N des entiers naturels tous deux supérieurs ou égaux à 3.

De préférence M = N de sorte à obtenir des blocs carrés.

En fonction de la longueur du message, ledit message peut être scindé en fragments, chaque fragment étant encodé sur un bloc respectif. Par concision, on assimilera message et fragment(s).

Les blocs peuvent être répartis suivant des formes variées adaptées au support utilisé. Par exemple, les blocs peuvent se trouver répartis dans le fond d'une photographie ou former un motif particulier. La seule contrainte est qu'ils restent à l'intérieur de la surface couverte par les amers ou dans leur proximité immédiate, afin de permettre un bon redressement.

Dans un bloc codant, un fragment est encodé sur un ensemble d'éléments binaires appelés « codants » dont la position est connue et prédéterminée.

Il est proposé ici que chaque bloc codant contient, outre les éléments binaires codants, un ensemble d'éléments binaires non-codants, différents des éléments binaires codants, et dont la position est également connue et prédéterminée.

En l'espèce, on prévoit que chaque bloc M x N est organisé en :
- un ensemble de sous-blocs codants, chaque sous-bloc codant comprenant un ensemble McxNc d'éléments binaires codants ; avec Mc et Nc deux entiers naturels tels que Mc<M et Nc<N, en particulier Mc=M/2 et Nc=N/2, et
- un ensemble de sous-blocs non-codants, chaque sous-bloc non-codant comprenant un ensemble MnxNn d'éléments binaires non-codants ; avec Mn et Nn deux entiers naturels tels que Mn<M et Nn<N, en particulier Mn=M/2 et Nn=N/2.

Selon l'invention, chaque bloc contient donc un ensemble de sous-blocs d'éléments binaires codants, et un ensemble de sous-blocs d'éléments binaires non-codants, la position de chaque sous-bloc étant connue et prédéterminée.

De préférence, si M=N, on prévoit alors que Mc=Nc et Mn=Mn de sorte à obtenir également des sous-blocs carrés.

De préférence, Mc=Mn et Nc=Nn, de sorte que les sous-blocs codants aient la même taille que les sous-blocs non-codants.

Par exemple, comme illustré sur la figure 4, Mc=Nc=Mn=Nn=2. Chaque bloc est donc organisé en sous-blocs de 2 x 2 éléments binaires codants ou non-codants chacun, illustrés en traits gras sur la figure 4, et encodant chacun 4 bits soit 2^4 = 16 valeurs.

On prévoit qu'une partie au moins des sous-blocs non-codants d'un bloc donné implémentent un code correcteur d'erreurs, en l'espèce un code de Reed-Solomon, sur les données encodées par une partie au moins des sous-blocs codants.

On peut prévoir que :
- L'un au moins des sous-blocs non-codants est un sous-bloc de synchronisation servant à resynchroniser le bloc au moyen d'un amer, par exemple un code conventionnel tel que (1, 0, 0, 1) comme illustré figure 4 pour le sous-bloc positionné en haut à gauche du bloc,
- Deux au moins des sous-blocs non-codants sont des sous-blocs de sécurisation disposés de préférence diamétralement opposés, ce qui permet de sécuriser une diagonale centrale du bloc au moyen d'un code correcteur d'erreur, en l'espèce de Reed-Solomon et par exemple un code de Reed-Solomon RS(5,3) pour un bloc 5x5, ce qui est illustré par des sous-blocs vierges en bas à gauche et en haut à droite du bloc 10x10 de la figure 4,
- L'un au moins des sous-blocs non-codants est un sous-bloc de numérotation permettant de numéroter le bloc (numérotation de 0 à 15 dans ce cas), ce qui est utile en cas d'organisation non linéaire, et qui est illustré par le sous bloc (0, 0, 1, 1) en bas à droite du bloc de la figure 4.

Le sous-bloc de numérotation peut être remplacé par un sous-bloc de sécurisation, ou autre.

De préférence, le sous-bloc de synchronisation, les sous-blocs de sécurisation et l'éventuel sous-bloc de numérotation sont disposés aux 4 coins du bloc, comme illustré figure 4.

De préférence, on prévoit que pour un bloc :
- au moins une ligne du bloc comprend un ensemble d'éléments binaires (respectivement un ensemble de sous-blocs) codants adjacents deux à deux, ledit ensemble étant entouré d'un ensemble d'éléments binaires (respectivement un ensemble de sous-blocs) non-codants, et
- au moins une colonne du bloc comprend un ensemble d'éléments binaires (respectivement un ensemble de sous-blocs) codants adjacents deux à deux, ledit ensemble étant entouré d'un ensemble d'éléments binaires (respectivement un ensemble de sous-blocs) non-codants.

En particulier, on peut prévoir que l'ensemble des sous-blocs non-codants d'une ligne donnée implémentent un code correcteur d'erreur des données codées par l'ensemble de sous-blocs codants de ladite ligne.

Similairement, on peut prévoir que l'ensemble des sous-blocs non-codants d'une colonne donnée implémentent un code correcteur d'erreur des données codées par l'ensemble de sous-blocs codants de ladite colonne.

Ainsi, chaque ligne et chaque colonne de chaque bloc bénéficient d'une redondance par un algorithme correcteur d'erreurs, par exemple un code de Reed-Solomon.

Dans un mode de réalisation, les sous-blocs codants sont disposés au centre du bloc et entourés des sous-blocs non-codants.

Grâce à cette caractéristique, chaque bloc comprend un code correcteur dans deux directions perpendiculaires simultanées, ce qui permet de limiter les risques que des rayures, le plus souvent linéaires, n'empêchent la lecture d'une partie de l'information de code-barres 2D.

En particulier, on peut prévoir que chaque sous-bloc non-codant d'une ligne donnée implémente un code de Reed-Solomon RS(X,Y) des sous-blocs codant de ladite ligne, avec :
- X le nombre de sous-blocs total (codants et non-codants) de ladite ligne, et
- Y le nombre de sous-blocs non-codants de ladite ligne.

En l'espèce, avec un bloc 10x10 comprenant 5 sous-blocs 2x2 répartis en 3 sous-blocs codants et 2 sous-blocs non-codants, on a X=M/2, c'est-à-dire M=10 ; X=5 et Y=X-2=3. Dans cet exemple illustré sur la figure 4, on a donc au moins une ligne comprenant 3 sous-blocs codants encadrés par 2 sous-blocs non-codants qui implémentent chacun un code de Reed-Solomon RS(5,3).

Similairement, on peut prévoir que chaque sous-bloc non-codant d'une colonne donnée implémente un code de Reed-Solomon RS(X',Y') des sous-blocs codant de ladite ligne, avec :
- X' le nombre de sous-blocs total (codants et non-codants) de ladite colonne, et
- Y' le nombre de sous-blocs non-codants de ladite ligne.

En l'espèce, avec un bloc 10x10 comprenant 5 sous-blocs 2x2 repartis en 3 sous-blocs codants et 2 sous-blocs non-codants, on a X'=M/2, c'est-à-dire M=10 ; X'=5 et Y'=X'-2=3. Dans cet exemple illustré sur la figure 4, on a donc au moins une colonne comprenant 3 sous-blocs codants encadrés par 2 sous-blocs non-codants qui implémentent chacun un code de Reed-Solomon RS(5,3).

Dans ce cas, chaque bloc comprend donc 5 x 5 sous-blocs, répartis en 3 x 3 sous-blocs codants centraux et en 16 sous-blocs non-codants périphériques. On prévoit que les 3 x 3 sous-blocs centraux contiennent le message, représenté par l'ensemble de valeurs 1 sur la figure 4. Les sous-blocs de la première ligne, de la dernière ligne, de la première colonne et de la dernière colonne du bloc constituent les sous-blocs non-codants périphériques. 4 sous-blocs périphériques constituent les coins du bloc. Les autres sous-blocs constituent les sous-blocs codants centraux.

Une fois le code-barres 2D encodé, il est solidarisé de l'illustration source, par exemple par impression sur le même support que celle-ci.

En particulier, on peut prévoir, pour plus de discrétion et suivant le type d'usage, que le code soit imprimé avec une encre invisible, comprenant typiquement des pigments UV ou IR, ce qui permet de ne pas être visible, donc de ne pas gêner la lecture / visualisation de l'illustration source en lumière visible, et d'être malgré tout contrôlable, par un contrôle sous éclairage UV ou IR.

### Encodage de la couleur

L'illustration source est en couleur. Elle peut être directement solidaire de son support de destination. Elle peut aussi être transférée sur son support de destination. Dans ce cas par exemple, une illustration source peut être une photographie d'identité qui est numérisée, éventuellement redimensionnée, puis imprimée sur un support de destination tel qu'un document d'identité.

Sur son support de destination, l'illustration source peut donc être en couleur ou en niveaux de gris, en fonction notamment du procédé de transfert et du support utilisés (par exemple gravure laser en niveaux de gris sur du polycarbonate, impression couleur sur du PVC, etc.).

Ainsi, on entend par « illustration inscrite » indistinctement :
- l'illustration source en couleur *per se*, par exemple une photographie d'identité, dans ce cas le support de destination est le papier d'impression,
- l'illustration source en couleur solidaire de son support de destination, par exemple une photographie d'identité sur un document d'identité, dans ce cas le support de destination est le document d'identité,
- une copie de l'illustration source sur son support de destination, en niveaux de gris ou en couleur ; par exemple pour une photographie d'identité imprimée ou gravée sur un document d'identité, officiel ou non, dans ce cas le support de destination peut être quelconque,
- une copie de l'illustration source, affichée sur un écran d'affichage, par exemple d'un objet communicant, dans ce cas le support de destination est l'écran d'affichage.

L'illustration source peut devenir une illustration inscrite (par exemple pour un document d'identité) puis une illustration reconstruite (par exemple lors d'un contrôle).

De préférence, on prévoit de solidariser ladite illustration inscrite et ledit support de destination, par exemple par impression, gravure, marquage laser, collage ou tout autre moyen de solidarisation (agrafage, etc.).

On peut prévoir une étape consistant à encoder au moins certaines informations de couleur de l'illustration source dans le code-barres 2D. On considère donc indistinctement les termes « couleur » et « information de couleur ».

Ainsi, même si l'illustration inscrite est en niveaux de gris, le code-barres 2D encode néanmoins des informations de couleur de l'illustration source, ce qui est particulièrement utile lors du décodage, comme exposé ultérieurement.

En l'espèce, on prévoit d'encoder au moins certaines informations de couleur de l'illustration source dans le message, et en particulier sous forme de métadonnées, de la manière suivante.

On prévoit de traiter l'illustration source, le traitement comprend une étape consistant à décomposer, ou découper, l'illustration source en un ensemble de zones, et d'associer à chaque zone une information de couleur, ce qui permet de compresser les informations.

Avantageusement, on prévoit de limiter le nombre de zones, de sorte à limiter le nombre d'octets du message tout en conservant une information pertinente sur la couleur de l'illustration source. Il ne s'agit donc pas de coder l'ensemble de pixels de l'illustration source mais de trouver un compromis entre une information signifiante (par exemple des cheveux bruns, des yeux bleus, etc.) et un nombre d'octets relativement faible, voire aussi faible que possible, pour coder cette information de couleur.

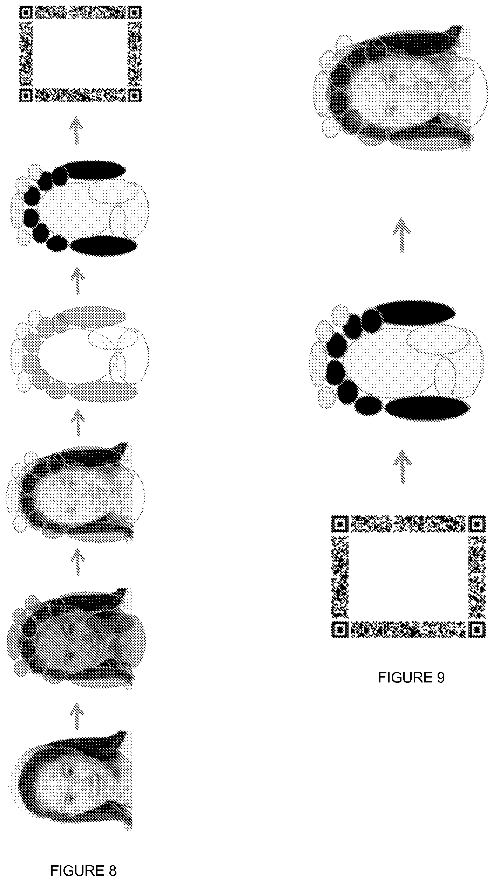

**Dans une première variante d'un premier mode de réalisation,** illustrée schématiquement figure 8, chaque zone est définie par une primitive, déterminée par exemple par un algorithme de reconnaissance de forme, un algorithme de reconnaissance biométrique ou un gradient de couleur.

Sur une illustration source telle qu'un visage, il est ainsi possible de reconnaitre par exemple les yeux, les cheveux, la forme du visage, etc.

De préférence chaque zone présente une forme géométrique simple, en l'espèce choisie parmi un ensemble comprenant :
- les cercles,
- les ellipses,
- les polygones, en particulier les rectangles.

L'avantage des cercles, des ellipses et des rectangles réside notamment dans le fait qu'ils peuvent être décrits, donc enregistrés comme métadonnées, sous forme d'un nombre limité de descripteurs de forme, en l'espèce respectivement :
- les coordonnées du centre et la valeur du rayon du cercle,
- les coordonnées des foyers et la valeur de la constante de la somme des distances aux foyers, et
- les coordonnées de deux sommets opposés ;
   ce qui revient à enregistrer le type de forme et la position de chaque forme.

Ainsi, le type de métadonnées permet avantageusement d'identifier un type de primitive correspondant (cercle, ellipse, rectangle, etc.).

A chaque zone correspond alors une couleur unique, typiquement la valeur moyenne des couleurs de la zone.

On peut également prévoir une étape de réduction combinatoire du nombre de zones ou de primitives, ce qui permet d'en réduire le nombre, donc d'obtenir un message moins lourd à encoder.

**Dans une deuxième variante du premier mode de réalisation,** chaque zone est définie par détection de contours de l'illustration source, par exemple par l'un quelconque parmi un filtre de Prewitt, un filtre de Sobel et un filtre de Canny.

Dans cette variante, on prévoit de ne sélectionner que les contours fermés, chaque contour fermé correspondante à une zone.

On peut alors définir (calculer) la position du centre de chaque zone.

Avantageusement, seule la position du centre de chaque zone peut être enregistrée, et pas la forme obtenue par la détection de contours, ce qui permet également d'obtenir un message moins lourd à encoder.

On peut alors associer une couleur unique à chaque zone définie et enregistrer la correspondance unique entre une zone et une couleur pour l'ensemble des zones définies.

De préférence, on prévoit d'encoder le type d'encodage dans le champ des métadonnées, par exemple selon une valeur binaire correspondant à la première variante et l'autre valeur binaire correspondant à la deuxième variante.

Quelle que soit la variante, on peut prévoir une étape d'analyse spectrale pour déterminer la longueur d'onde moyenne de chaque zone, afin de déterminer une couleur unique par zone.

Chaque forme, c'est-à-dire l'ensemble de descripteurs de forme pour la première variante et les coordonnées du centre de chaque contour fermé pour la deuxième variante, et la couleur associée à chaque forme peuvent alors être enregistrées, en l'espèce sous forme de chaine de caractères dans le champ des métadonnées.

**Dans une troisième variante du premier mode de réalisation,** non illustrée, chaque zone est définie C1 préalablement par application d'une grille géométrique statique ayant une forme prédéterminée, en l'espèce celle d'un visage, à l'illustration source, éventuellement redimensionnée aux dimensions de la grille.

On peut alors C2 établir une correspondance unique entre chaque zone de l'illustration source et chaque zone de l'illustration inscrite numérisée; et colorer C3 chaque zone de l'illustration inscrite numérisée avec la couleur de la zone de l'illustration source correspondante extraite des métadonnées.

**Quelle que soit la variante** du premier mode de réalisation, le traitement comprend également une étape consistant à associer ensuite à chaque zone une couleur respective, de préférence unique (figure 5), de sorte à créer un ensemble d'à-plats.

**Dans un deuxième mode de réalisation,** on peut prévoir une étape de prétraitement, préalable à l'étape de traitement décrite ci-après, et comprenant au moins l'une des étapes parmi :
- une étape consistant à lisser et à réduire le bruit de l'illustration source, par exemple en appliquant un filtre médian sur l'ensemble de l'illustration source numérisée, ce qui permet d'augmenter le nombre de zones homogènes dans l'illustration ;
- une étape consistant à redimensionner l'illustration source numérisée, de préférence en préservant le même ratio entre la hauteur et la largeur de celle-ci. De préférence les dimensions (en unité de longueur ou en nombre de pixels) selon lesquelles l'illustration source est redimensionnée sont prédéterminées, par exemple 50x64 (hauteur x largeur) pixels.

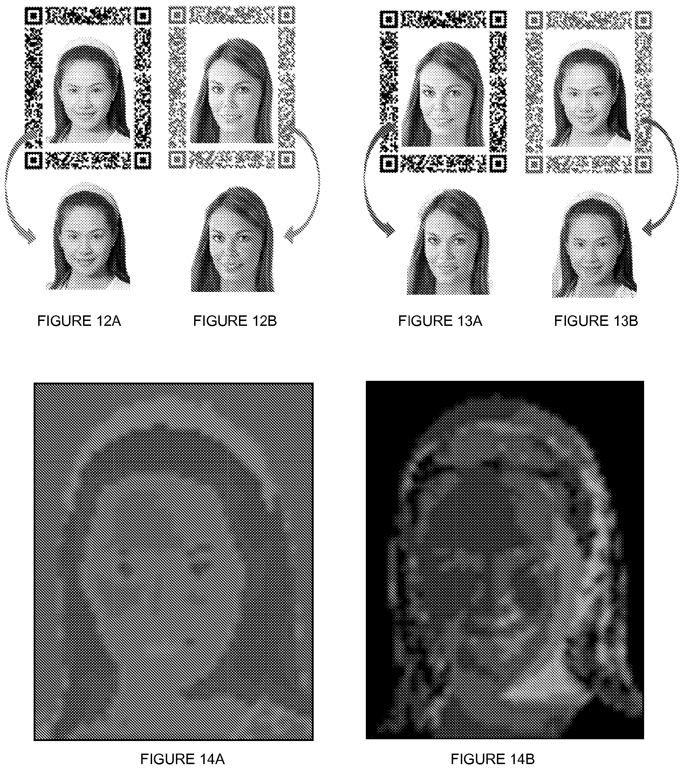

Le traitement de l'illustration source comprend des étapes consistant à :
- numériser l'illustration source selon un codage Rouge, Vert, Bleu (ou RGB par anglicisme) ;
- convertir l'illustration source numérisée dans l'espace Teinte Saturation Valeur (ou Teinte Saturation Luminance), comprenant une composante teinte, une composante saturation et une composante valeur (ou luminance), et enregistrer dans une mémoire, en l'espèce temporaire, au moins l'illustration source numérisée dans l'espace des teintes (figure 14A) et l'illustration source numérisée dans l'espace des saturations (figure 14B) ;
- segmenter l'illustration source numérisée en un ensemble de zones, chaque zone correspondant à l'ensemble dit « homogène » des pixels de l'illustration source numérisée dont la teinte, respectivement la saturation, est uniforme.

L'espace Teinte Saturation Valeur est également appelé HSV par anglicisme. La teinte correspond à la couleur, la saturation correspond à la pureté de la couleur et la valeur correspond à la brillance (ou luminance) de la couleur.

En l'espèce uniquement la composante teinte et la composante saturation sont enregistrées.

L'étape de segmentation vise à segmenter, ou partitionner, les n pixels (ou points) de l'illustration source numérisée en k ensembles (ou zones ou classes) tels que k ≤ n, en minimisant la distance entre les points à l'intérieur de chaque zone, la distance étant calculée dans l'espace des teintes et dans l'espace des saturations, et non pas dans l'espace géométrique (positions X, Y des pixels dans l'image).

Typiquement l'étape de segmentation est mise en œuvre par un algorithme de classification par apprentissage, en l'espèce non supervisé. En l'espèce, on utilise un partitionnement en k-moyennes (ou *k-means* en anglais).

Chaque classe est représentée par le barycentre (centroïde) de la classe et comprend l'ensemble des pixels les plus proches entre eux dans l'espace des teintes et dans l'espace des saturations.

On prédéfinit un nombre de classes, par exemple K = 5 classes, et on applique le même algorithme de classification pour la composante teinte et pour la composante saturation. On obtient donc un ensemble de 5 classes dans l'espace des teintes, notées par exemple T1 à T5, et un ensemble de 5 classes dans l'espace des saturations, notées par exemple S₁ à S₅. On peut aussi prévoir que le nombre de classes pour l'espace des teintes est différent du nombre de classes pour l'espace des saturations.

Chaque pixel P de l'illustration source numérisée peut être classé à l'issue de l'étape de segmentation dans une classe unique de teinte et dans une classe unique de saturation. On peut donc associer chaque pixel P à la classe Ti (i ∈ [1 ; K]) dans l'espace des teintes et à la classe Si (i ∈ [1 ; K]) dans l'espace des saturations à laquelle il appartient.

Par exemple, on peut définir :
- P_{X,Y}(T_P_{X,Y}) la valeur de teinte du pixel P de coordonnées X et Y ; et
- P_{X,Y}(S_P_{X,Y}) la valeur de saturation du pixel P de coordonnées X et Y.

Cependant, enregistrer chaque valeur (T_P_{X,Y}) et (S_P_{X,Y}) pour chaque pixel P_{X,Y} demanderait trop de ressources.

Dans un premier temps, on prévoit de remplacer les coordonnées de chaque pixel par la valeur du centroïde de sa classe, dans l'espace des teintes et de même dans l'espace des saturations.

On peut ainsi avantageusement définir par :
- P_{X,Y}(Ti) la valeur de teinte Ti du barycentre de la classe i (i ∈ [1 ; K]) dans laquelle le pixel P de coordonnées X et Y a été classé, avec 0 ≤ Ti ≤ 360; et
- P_{X,Y}(Si) la valeur de saturation Si du barycentre de la classe i (i ∈ [1 ; K]) dans laquelle le pixel P de coordonnées X et Y a été classé, avec 0 ≤ Si ≤ 100.

Par exemple :
- P_{12,7}(T₁) signifie que le pixel de coordonnées X = 12 et Y = 7 est classé dans la composante teinte T1, et
- P_{12,7}(S₃) signifie que ce même pixel de coordonnées X = 12 et Y = 7 est classé dans la composante saturation S3.

Ensuite, on prévoit de compresser les données de chaque pixel de l'illustration source numérisée.

Pour compresser les données, on prévoit de parcourir les pixels selon un sens de parcours prédéterminé, dans l'espace des teintes comme dans l'espace des saturations.

En l'espèce, on prévoit de parcourir l'illustration source numérisée colonne par colonne, de gauche à droite par colonnes de 1 pixel de large, et de haut en bas le long de chaque colonne.

Au lieu de coder la valeur de teinte Ti de chaque pixel P_{X,Y} le long de chaque colonne, ce qui impliquerait de coder Y valeurs ; on prévoit de coder, dans chaque colonne, une séquence d'au moins un couple de valeurs NTi, avec N le nombre de pixels consécutifs classés dans la composante teinte Ti. De même on prévoit de coder, dans chaque colonne, une séquence d'au moins un couple de valeurs NSi, avec N le nombre de pixels consécutifs classés dans la composante teinte Si.

De préférence, on prévoit un séparateur, en l'espèce une virgule, pour encoder le passage d'une colonne à la suivante, ce qui évite d'encoder le numéro de colonne.

Par exemple, la figure 1 représente une illustration source numérisée de 50 x 64 pixels, soit 50 pixels par ligne et 64 pixels par colonne. Dans ce cas X ∈ [1 ; 50] et Y ∈ [1 ; 64].

Dans l'espace des saturations :
Dans la première colonne tous les pixels sont classés dans la composante saturation S₁. Les pixels de la première colonne sont donc codés 64S₁.

Dans la deuxième colonne, les 30 premiers pixels sont classés dans la composante saturation S₁, les 20 pixels suivants sont classés dans la composante saturation S₂, et 14 pixels restants sont classés dans la composante saturation S₁. Les pixels de la deuxième colonne sont donc codés 30S₁20S₂14S₁. Dans ce cas la deuxième colonne est donc codée au maximum selon 6 valeurs uniquement : 30, S₁, 20, S₂, 14 et S₁.

Et ainsi de suite pour les colonnes suivantes.

De manière similaire dans l'espace des teintes :
Dans la première colonne tous les pixels sont classés dans la composante saturation T₁. Les pixels de la première colonne sont donc codés 64T₁.

Dans la deuxième colonne, les 20 premiers pixels sont classés dans la composante teinte T₁, les 10 pixels suivants sont classés dans la composante teinte T₂, les 10 pixels suivants sont classés dans la composante teinte T₁, et 24 pixels restants sont classés dans la composante teinte T₃. Les pixels de la deuxième colonne sont donc codés 20T₁10T₂10T₁24T₃. Dans ce cas la deuxième colonne est donc codée au maximum selon 8 valeurs uniquement : 20, T₁, 10, T₂, 10, T₁, 24 et T₃.

Et ainsi de suite pour les colonnes suivantes.

Comme les valeurs Ti et Si peuvent être redondante par colonne, il est avantageux d'enregistrer séparément l'ensemble des valeurs Ti et Si pour i = 1...K, en l'espèce sous forme de dictionnaire.

Dans l'exemple ci-dessus, on encode donc les deux premières colonnes de la manière suivante :
- 64S₁,30S₁20S₂14S₁ dans l'espace des saturations, et
- 64T₁,20T₁10T₂10T₁24T₃ dans l'espace des teintes ;
   les valeurs de T1 à T5 et de S1 à S5 étant encodées séparément.

L'ensemble de couple de valeurs NTi, et l'ensemble des valeurs Ti et Si sont encodés selon des positions prédéfinies de blocs du code-barres 2D décrit précédemment.

### Décodage

On prévoit de réaliser une capture optique de l'illustration inscrite, par exemple imprimée en niveaux de gris, et du code-barres 2D, grâce à un objectif optique, de préférence simultanément. L'illustration inscrite est ainsi numérisée et enregistrée dans une mémoire.

Par exemple, l'objectif optique est celui d'un objet communicant, l'objet communicant comprenant également une mémoire. Alternativement, l'objectif optique peut être une caméra ou une webcam, reliée à un calculateur et une mémoire.

Un programme d'ordinateur permettant le décodage décrit ci-après est enregistré dans la mémoire.

On prévoit une étape consistant à rechercher la position des amers, par exemple par l'emploi de détecteurs de gradients.

Une fois les amers repérés, on prévoit une étape consistant à redresser l'image incluse entre les amers, par exemple au moyen de la méthode Warp-Affine dans la bibliothèque OpenCV.

Le redressement consiste à reconstruire, malgré un angle de prise de vue parfois non orthogonal au plan de l'illustration inscrite, l'ensemble des composants du code-barres 2D tels qu'ils se seraient trouvés sur une surface initiale plane.

On prévoit ensuite une étape consistant à faire correspondre l'image redressée avec une grille prédéterminée, ce qui permet d'effectuer la lecture des pixels du code-barres 2D et la conversion de ceux-ci en une chaîne de symboles binaires.

On peut alors décoder le message, en passant ces symboles à l'algorithme inverse de l'algorithme utilisé pour l'encodage.

La signature peut alors être vérifiée pour s'assurer qu'il s'agit bien d'un contenu authentique émis par l'autorité signataire. Si ce n'est pas le cas, le message peut être rejeté comme non authentique.

Les caractéristiques de l'illustration inscrite numérisée, les données (attributs) et les métadonnées sont extraites du code-barres 2D, de préférence uniquement si l'authenticité est vérifiée. Ces attributs extraits du code-barres 2D sont alors dits « lus ».

En parallèle (ou en série) des opérations précédentes, l'illustration inscrite lue par le capteur optique est traitée pour en extraire les mêmes points remarquables et les mêmes attributs de l'illustration source sélectionnés pour la génération du code-barres 2D. Ces attributs extraits de l'image numérique de l'illustration inscrite sont alors dits « recalculés ». En particulier, on peut considérer tout ou partie des points remarquables initialement enregistrés, en fonction du niveau de confiance souhaité.

On prévoit alors une étape consistant à comparer la valeur de la différence entre les attributs lus et les attributs recalculés à une valeur seuil prédéterminée enregistrée dans une mémoire.

Typiquement la différence entre attributs lus et les attributs recalculés est effectuée au moyen d'un ensemble de métriques (typiquement des rapports de distance ou d'angles), par exemple euclidiennes.

Par exemple, comme illustré figure 3, on prévoit que :
- une métrique REy correspond à la distance selon l'axe Oy, entre l'œil droit et un repère fixe prédéterminé,
- une métrique Ny correspond à la distance selon l'axe Oy, entre le nez et un repère fixe prédéterminé,
- une métrique My correspond à la distance selon l'axe Oy, entre la bouche et un repère fixe prédéterminé,
- une métrique Angle2 correspond à l'angle entre les pupilles et la pointe du nez,
- etc.

A titre d'exemple non limitatif, le repère fixe prédéterminé est par exemple un bord de la photo, un point remarquable du visage, en l'espèce sur le front, etc.

Si la distance entre les attributs lus et les attributs recalculés est en dessous de la valeur seuil, on considère que l'illustration inscrite numérisée par le capteur optique est bien conforme à l'illustration source originale, sinon on considère l'illustration inscrite comme non authentique.

Avantageusement, cette comparaison peut être mise en oeuvre hors ligne. Il est donc possible de vérifier l'authenticité d'une illustration source en tout endroit, grâce à un objet communicant et sans connexion réseau.

Dans le cas où l'empreinte numérique comprend en outre des données extrinsèques à l'illustration source, lesdites données extrinsèques (par exemple le numéro de carte, le nom, le prénom, etc.) décodées du code-barres 2D peuvent alors en outre être affichées à un utilisateur sur un écran d'affichage, et lui permettre de vérifier par lui-même qu'il s'agit bien des informations présentes sur le document.

Les métadonnées peuvent également servir à contrôler les caractéristiques propres au porteur du document, grâce à des moyens techniques additionnels (par exemple un lecteur d'empreintes, un scanner d'iris, etc.). L'illustration source (la photographie) ainsi authentifiée, peut permettre une vérification biométrique du porteur.

### Décodage de la couleur

Lorsque le code-barres 2D comprend un encodage de la couleur, l'illustration source peut être inscrite en niveaux de gris ou en couleurs sur un support. Par exemple, l'illustration inscrite est une photographie d'identité solidaire d'un document d'identité, la photographie représentant le porteur du document d'identité.

La numérisation du code-barres 2D et de l'illustration inscrite permet, par le décodage décrit ci-après, de reconstruire (indistinctement décoder ou recalculer) l'illustration source et d'afficher l'illustration reconstruite, en particulier sur l'écran d'affichage de l'objet communicant, ce qui peut être utile notamment dans le domaine de la sécurité, par exemple pour un contrôle, typiquement en comparant l'illustration reconstruite avec l'illustration inscrite, avec le porteur de document, voire avec l'illustration source d'origine, par exemple pour un contrôle en ligne avec une image source numérisée et diffusée en ligne.

Si l'illustration inscrite est en couleurs, alors il est en outre possible de comparer les couleurs entre l'illustration inscrite et l'illustration reconstruite, ce qui permet un contrôle supplémentaire.

On prévoit d'extraire les métadonnées dudit code-barres 2D, par exemple dans une mémoire temporaire.

De préférence, on prévoit A1 d'identifier le type d'encodage (en l'espèce par primitives ou par contours fermés).

**Pour la première variante du premier mode de réalisation d'encodage de la couleur,** correspondant au type d'encodage par primitives, on prévoit d'identifier chaque primitive, en l'espèce grâce au format desdites métadonnées.

On peut alors A2 appliquer chaque primitive à l'illustration inscrite numérisée.

On peut alors recalculer chaque zone et coloriser chaque couleur avec sa couleur respective associée à partir des primitives et des couleurs encodées dans lesdites métadonnées (figure 6).

On prévoit alors d'afficher sur l'écran d'affichage de l'objet communicant l'image résultante de la fusion A3 entre les zones colorisées recalculées et l'illustration inscrite numérisée (figure 7), la fusion étant connue en soi, ce qui est particulièrement utile quand l'illustration inscrite est en niveaux de gris.

**Pour la deuxième variante du premier mode de réalisation d'encodage de la couleur,** correspondant au type d'encodage par contours fermés, on prévoit tout d'abord B1 de définir un ensemble de zones de l'illustration inscrite numérisée par le même algorithme de détection de contours que celui mis en oeuvre pour l'encodage de la couleur.

Ainsi, la détection de contours est donc mise en œuvre une première fois (sur l'illustration source, pour l'encodage du code-barres 2D) ; et une deuxième fois (sur l'illustration inscrite, pour le décodage du code-barres 2D).

Par conséquent, il existe une correspondance unique B2 entre chaque zone de l'illustration source pour l'encodage du code-barres 2D et chaque zone de l'illustration inscrite numérisée pour le décodage du code-barres 2D. En l'espèce, la position du centre de chaque zone de l'illustration source pour l'encodage du code-barres 2D est la même que la position du centre de chaque zone de l'illustration inscrite numérisée pour le décodage du code-barres 2D.

On peut établir un contrôle de falsification, basé par exemple sur la comparaison du nombre de zones ou de la position des zones de l'illustration source et des zones de l'illustration inscrite.

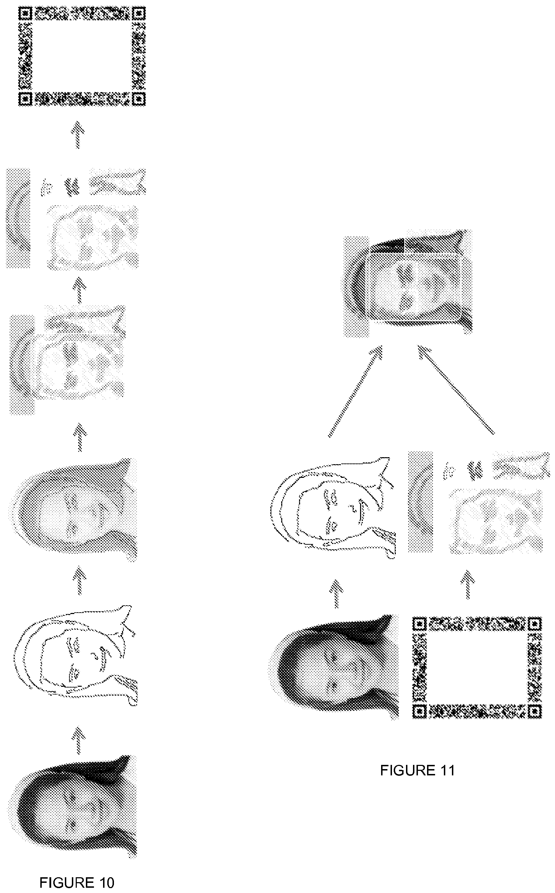

On peut calculer une illustration reconstruite de l'illustration source avec chaque zone et chaque couleur respective associée (figure 11) en associant l'information de couleur de chaque zone de l'illustration source avec chaque zone de l'illustration inscrite numérisée ; et par exemple colorer B3 chaque zone de l'illustration inscrite numérisée avec la couleur de la zone de l'illustration source correspondante extraite des métadonnées.

Typiquement, la couleur de chaque zone de l'illustration inscrite numérisée est déterminée par la couleur de chaque zone correspondante de l'illustration source, la correspondance étant déterminée par la position identique du centre de chaque zone.

L'affichage peut également comprendre une étape préalable de remplissage consistant à appliquer un algorithme de peinture à l'encre, plus connu sous l'anglicisme *inpainting*, à l'illustration reconstruite, c'est-à-dire une technique de reconstruction d'images détériorés ou de remplissage des parties manquantes d'une image, ce qui permet d'assurer une continuité entre deux objets artificiels, et en l'espèce d'éviter d'avoir des espaces blancs entre deux zones de couleur ; ou toute autre fonction équivalente susceptible de lisser, voire d'effacer, la pixellisation et/ou le zonage.

**Pour le deuxième mode de réalisation de l'encodage de la couleur,** on prévoit D1 d'extraire du dictionnaire les valeurs de l'ensemble de Ti et Si.

On prévoit également de calculer une illustration reconstruite de l'illustration source dans l'espace des teintes et dans l'espace des saturations, par décompression D2 des données compressées dans le code-barres 2D, ce qui revient à recomposer l'ensemble de (k) zones de l'espace des teintes et de l'espace des saturations. A cet effet, on extrait les informations de couleur dudit code-barres 2D et on reconstruit dans l'espace des teintes et dans l'espace des saturations. En l'espèce, on extrait l'ensemble de séquences d'au moins un couple de valeurs NTi pour chaque colonne. On peut alors reconstruire sur cette base l'illustration source dans l'espace des teintes. De manière similaire, on extrait l'ensemble de séquences d'au moins un couple de valeurs NSi pour chaque colonne. On peut alors reconstruire sur cette base l'illustration source dans l'espace des saturations.

Comme l'illustration inscrite a été numérisée, on peut prévoir une étape D3 consistant à redimensionner l'illustration reconstruite dans l'espace des saturations et dans l'espace des teintes aux dimensions de l'illustration inscrite numérisée.

On prévoit également D4 de reconstruire la composante de brillance à partir de l'illustration inscrite numérisée, ou éventuellement à partir de l'illustration source numérisée, de manière connue en soi : si l'illustration inscrite est en niveaux de gris, on en extrait directement la composante de brillance, et si l'illustration inscrite est en couleur, alors on la transforme en niveaux de gris par moyennage des valeurs RGB des pixels pour en extraire directement la composante de brillance.

On peut prévoir D5 de calculer les composantes de brillance de teinte et de saturation de l'illustration reconstruite par combinaison de l'ensemble des (k) zones de l'espace des teintes et de l'espace des saturations recomposées à l'étape D2, et la composante de brillance reconstruite à l'étape D4.

On a ainsi les trois composantes HSV de mêmes dimensions, correspondant à l'illustration source numérisée. On peut alors convertir D6 les trois composantes HSV en valeurs RGB et afficher sur l'écran d'affichage le résultat de cette conversion, c'est-à-dire afficher l'illustration reconstruite avec les couleurs reconstituée à partir du code-barres 2D.

Ainsi, même si l'illustration inscrite est en niveaux de gris sur son support de destination (par exemple une photographie d'identité gravée par laser sur un support en polycarbonate), le décodage du code-barres 2D permet de calculer une illustration reconstruite de l'illustration source en couleur à l'origine de l'illustration inscrite.

Il est ainsi possible de contrôler facilement certains aspects, par exemple la couleur des yeux, de la peau, des cheveux, etc. entre l'illustration affichée et le porteur de document d'identité. Il est aussi possible de détecter si l'illustration inscrite a été altérée. En effet, dans ce cas, le code-barres 2D ne code pas exactement les mêmes zones ou les mêmes couleurs. Il existe donc une différence entre l'illustration inscrite et l'illustration affichée, qui présente alors des artéfacts particulièrement visibles.

Par exemple, la figure 12A et la figure 12B illustrent respectivement le décodage du code-barres 2D pour lequel l'illustration source encadrée est originale. La figure 13A et la figure 13B illustrent respectivement le décodage du code-barres 2D pour lesquels les illustrations source ont été inversées : le code-barres 2D de la figure 13B correspond à l'illustration source de la figure 12A et le code-barres 2D de la figure 13B correspond à l'illustration source de la figure 12B. Dans ce cas, l'affichage des illustrations reconstruites affichées en partie basse des figures 13A et 13B fait apparaitre des artéfacts, par exemple sur la figure 13B, on voit dans le coin bas gauche la forme de la chevelure de la figure 12B. On peut ainsi très facilement et rapidement en conclure que l'illustration affichée et le code-barres 2D ne correspondent pas, et que l'un ou l'autre a probablement été altéré.

Il est intéressant de noter que ce procédé, qui peut être complètement dématérialisé, peut faire apparaitre des traces de falsifications comparables à celles auxquelles les contrôleurs, par exemple les contrôleurs aux frontières, sont habitués dans le contrôle de document physiques. D'où l'intérêt d'encoder la couleur même pour un contrôle de document purement numérique (qui n'est pas soumis aux contraintes et aux limitations techniques d'impression).

Avantageusement, l'extraction du message est mise en oeuvre automatiquement.

La présente invention permet d'authentifier une même illustration source à deux instants distincts, malgré les endommagements inévitables dans le cycle de vie de celle-ci ou d'un document supportant celle-ci, quelle que soit la nature des supports des documents (physiques ou numériques) à contrôler.

La présente invention peut aussi permettre d'authentifier que la copie d'une illustration source est conforme à l'originale.

La présente invention n'est pas limitée aux modes de réalisation précédemment décrits. Par exemple elle peut être mise en oeuvre dans le domaine de l'authentification de marques déposées, par exemple pour authentifier que la marque apposée sur un produit est bien la marque originale ; pour l'authentification d'étiquettes, en particulier comportant un aléa de fabrication permettant de les caractériser, notamment dans le domaine de la sécurité ou des vins et spiritueux.

En ce sens, une illustration au sens de la présente invention peut être une signature graphique au sens du brevet EP2526531 déposé par la demanderesse.

## Revendications

1. Procédé d'encodage d'une illustration source en couleurs, comprenant des étapes consistant à :
- inscrire ladite illustration source sous forme d'une illustration inscrite en niveaux de gris ou en couleur,
- encoder un message sous la forme d'un code-barres à deux dimensions comprenant un ensemble de blocs, chaque bloc codant un fragment dudit message et comprenant un ensemble de (M) lignes et (N) colonnes, et chaque bloc comprenant un ensemble de sous-blocs codants, chaque sous-bloc comprenant un ensemble d'éléments binaires ;
**caractérisé en ce que** l'étape d'encodage comprend des étapes préalables consistant à :
- définir ou identifier un ensemble de points remarquables sur l'illustration source,
- calculer un ensemble d'attributs en fonction de certains au moins des points remarquables dudit ensemble,
- sélectionner, parmi l'ensemble des attributs calculés, un ensemble d'au moins un attribut permettant de définir une empreinte numérique,
- optionnellement compresser ladite empreinte numérique,
- optionnellement signer ladite empreinte numérique au moyen d'une signature cryptographique,
- enregistrer dans le message l'un parmi :
- un ensemble d'au moins un attribut,
- l'empreinte numérique,
- l'empreinte numérique compressée,
- l'empreinte numérique signée non compressée, et
- l'empreinte numérique compressée et signée ;
le procédé comprenant en outre une étape consistant à :
- encoder au moins certaines informations de couleur de l'illustration source dans ledit code-barres à deux dimensions.

2. Procédé selon la revendication 1, comprenant en outre au moins l'une des étapes consistant à :
- inscrire ledit code-barres à deux dimensions sur un support de destination ;
- solidariser ladite illustration inscrite et ledit support de destination ;
- rendre le code-barres à deux dimensions solidaire de l'illustration inscrite ; et
- disposer le code-barres à deux dimensions de manière prédéfinie par rapport à l'illustration inscrite, optionnellement en encadrant ladite illustration inscrite.

3. Procédé selon l'une quelconque des revendications précédentes, dans lequel chaque bloc codant comprend en outre un ensemble de sous-blocs non-codants dont la position est prédéfinie, le procédé comprenant en outre, pour chaque bloc codant, des étapes consistant à :
- sélectionner un ensemble prédéfini de sous-blocs codants,
- encoder sur un ensemble d'au moins un sous-bloc non-codant prédéfini le résultat de l'application d'un code correcteur d'erreurs aux valeurs encodées par ledit ensemble prédéfini de sous-blocs codants.

4. Procédé selon l'une quelconque des revendications précédentes, comprenant :
- numériser l'illustration source si celle-ci n'est pas déjà sous forme numérique ; et
Soit :
- décomposer l'illustration source numérisée en un ensemble de zones, chaque zone étant définie :
- par une primitive, déterminée par un algorithme de reconnaissance de forme, un algorithme de reconnaissance biométrique ou un gradient de couleur ; ou
- par un algorithme de détection de contours ; ou
- par application à l'illustration source d'une grille géométrique statique ayant une forme prédéterminée, optionnellement celle d'un visage, la grille comprenant un ensemble de zones ; et
- associer à chaque zone une couleur ou une information de couleur respective ;
Soit :
- convertir l'illustration source numérisée, éventuellement redimensionnée, dans l'espace Teinte Saturation Valeur comprenant une composante teinte et une composante saturation ; et
- compresser les informations de couleur de l'illustration source dans l'espace des teintes et dans l'espace des saturations par :
- décomposer ladite composante teinte et ladite composante saturation en un ensemble de zones respectives, chaque zone correspondant à un ensemble homogène de pixels dont la teinte, respectivement la saturation, est uniforme ; et
- associer à chaque zone une teinte et une saturation respective et les enregistrer dans un dictionnaire.

5. Procédé selon l'une quelconque des revendications précédentes, comprenant au moins l'une des étapes parmi :
- ajouter à l'empreinte numérique des données extrinsèques à l'illustration source,
- sélectionner un nombre d'attributs supérieurs à une valeur seuil enregistrée dans une mémoire parmi l'ensemble d'attributs calculés ; et
- encoder au moins certaines informations de couleur de l'illustration source sous forme de métadonnées dudit code-barres.

6. Procédé selon l'une quelconque des revendications 3 à 5, comprenant au moins l'une des étapes consistant à, pour chaque bloc :
- disposer les sous-blocs codants et les sous-blocs non-codants de sorte que :
o au moins une ligne du bloc comprend un ensemble de sous-blocs codants adjacents deux à deux, ledit ensemble étant entouré d'un ensemble de sous-blocs non-codants, et
o au moins une colonne du bloc comprend un ensemble de sous-blocs codants adjacents deux à deux, ledit ensemble étant entouré d'un ensemble de sous-blocs non-codants ; et
- disposer les sous-blocs codants et les sous-blocs non-codants de sorte que :
o pour au moins une colonne comprenant un ensemble de sous-blocs codants, chaque sous-bloc non-codant de ladite colonne encode un résultat respectif de l'application d'un code correcteur d'erreurs respectif aux valeurs encodées par ledit ensemble de sous-blocs codants de ladite colonne,
o pour au moins une ligne comprenant un ensemble de sous-blocs codants, chaque sous-bloc non-codant de ladite ligne encode un résultat respectif de l'application d'un code correcteur d'erreurs respectif aux valeurs encodées par ledit ensemble de sous-blocs codants de ladite ligne.

7. Procédé d'authentification d'une illustration inscrite en niveaux de gris ou en couleur, issue d'une illustration source en couleurs, comprenant des étapes consistant à :
- numériser par un capteur optique :
o une Ilustration inscrite en niveaux de gris ou en couleur, et
o un code-barres à deux dimensions encodé selon un procédé d'encodage selon l'une quelconque des revendications précédentes, et encodant un message et des métadonnées ;
- décoder le message dudit code-barres à deux dimensions, et
- comparer le message décodé et l'illustration inscrite.

8. Procédé d'authentification selon la revendication 7, comprenant des étapes consistant à :
- sur l'illustration inscrite lue par le capteur optique :
o définir ou identifier un ensemble de points remarquables sur l'illustration inscrite lue par le capteur optique,
o recalculer un ensemble d'attributs en fonction de certains au moins des points remarquables dudit ensemble,
o sélectionner, parmi l'ensemble des attributs recalculés, un ensemble d'au moins un attribut permettant de définir une empreinte numérique,
- comparer la valeur de la différence entre les attributs décodés dudit code-barres à deux dimensions et les attributs recalculés à une valeur seuil prédéterminée enregistrée dans une mémoire, et
- optionnellement vérifier la signature cryptographique.

9. Procédé d'authentification selon l'une quelconque des revendications 7 ou 8, comprenant en outre des étapes consistant à :
- calculer une illustration reconstruite de l'illustration source par extraction du message ou des métadonnées dudit code-barres à deux dimensions et à partir dudit message extrait ou desdites métadonnées extraites en suivant l'une des séquences d'étapes A, B, C ou D suivantes, consistant à:
A1. identifier un ensemble de primitives parmi lesdites métadonnées,
A2. appliquer chaque primitive à l'illustration inscrite numérisée pour recalculer chaque zone sur l'illustration inscrite numérisée et coloriser chaque zone avec sa couleur respective associée ; et
A3. fusionner lesdites zones colorisées recalculées et l'illustration inscrite numérisée ; ou
B1. définir un ensemble de zones de l'illustration inscrite numérisée par un algorithme de détection de contours ;
B2. établir une correspondance unique entre chaque zone de l'illustration source et chaque zone de l'illustration inscrite numérisée;
B3. colorer chaque zone de l'illustration inscrite numérisée avec la couleur de la zone de l'illustration source correspondante extraite des métadonnées; ou
C1. définir un ensemble de zones de l'illustration inscrite numérisée par application d'une grille géométrique statique ayant une forme prédéterminée, optionnellement celle d'un visage, à l'illustration inscrite numérisée ;
C2. établir une correspondance unique entre chaque zone de l'illustration source et chaque zone de l'illustration inscrite numérisée;
C3. colorer chaque zone de l'illustration inscrite numérisée avec la couleur de la zone de l'illustration source correspondante extraite des métadonnées; ou
D1. extraire d'un dictionnaire les valeurs de l'ensemble des classes dans l'espace des teintes et dans l'espace des saturations,
D2. recomposer l'ensemble de zones de l'espace des teintes et de l'espace des saturations par décompression du code-barres à deux dimensions,
D3. optionnellement redimensionner l'illustration reconstruite dans l'espace des saturations et dans l'espace des teintes aux dimensions de l'illustration inscrite numérisée,
D4. reconstruire la composante de brillance à partir de l'illustration inscrite numérisée, ou à partir de l'illustration source numérisée,
D5. calculer les composantes de brillance de teinte et de saturation de l'illustration reconstruite par combinaison de l'ensemble des zones de l'espace des teintes et de l'espace des saturations recomposées à l'étape D2, et la composante de brillance reconstruite à l'étape D4,
D6. convertir les composantes de brillance de teinte et de saturation en valeurs rouge vert bleu, et
- afficher l'illustration reconstruite sur un écran d'affichage ;
le procédé comprenant optionnellement en outre une étape de remplissage consistant à appliquer un algorithme de restauration sur l'illustration reconstruite préalablement à l'étape d'affichage.

10. Programme d'ordinateur comprenant des instructions de code de programme pour l'exécution des étapes du procédé selon l'une quelconque des revendications précédentes, lorsque ledit programme est exécuté sur un ordinateur.

## Patentansprüche

1. Verfahren zum Codieren einer farbigen Quellabbildung, das die folgenden Schritte umfasst:
- Aufzeichnen der Quellabbildung in Form einer aufgezeichneten Abbildung in Graustufen oder in Farbe,
- Codieren einer Nachricht in Form eines zweidimensionalen Strichcodes, der eine Gesamtheit von Blöcken umfasst, wobei jeder Block ein Fragment der Nachricht codiert und eine Gesamtheit von (M) Zeilen und (N) Spalten enthält, wobei jeder Block eine Gesamtheit von codierenden Unterblöcken enthält, wobei jeder Unterblock eine Gesamtheit binärer Elemente enthält;
**dadurch gekennzeichnet, dass** der Codierungsschritt die folgenden vorhergehenden Schritte umfasst:
- Definieren oder Identifizieren einer Gesamtheit hervorgehobener Punkte auf der Quellabbildung,
- Berechnen einer Gesamtheit von Attributen als Funktion zumindest bestimmter hervorgehobener Punkte der Gesamtheit,
- Auswählen aus der Gesamtheit berechneter Attribute einer Gesamtheit aus wenigstens einem Attribut, das ermöglicht, einen digitalen Abdruck zu definieren,
- optional Komprimieren des digitalen Abdrucks,
- optional Signieren des digitalen Abdrucks mittels einer kryptographischen Signatur,
- Aufzeichnen in der Nachricht eines der Folgenden:
- eine Gesamtheit aus wenigstens einem Attribut,
- den digitalen Abdruck,
- den komprimierten digitalen Abdruck,
- den signierten und nicht komprimierten digitalen Abdruck und
- den komprimierten und signierten digitalen Abdruck;
wobei das Verfahren außerdem den folgenden Schritt umfasst:
- Codieren wenigstens bestimmter Farbinformationen der Quellabbildung in dem zweidimensionalen Strichcode.

2. Verfahren nach Anspruch 1, das außerdem wenigstens einen der folgenden Schritte umfasst:
- Aufzeichnen des zweidimensionalen Strichcodes auf einen Zielträger;
- Befestigen der aufgezeichneten Abbildung und des Zielträgers aneinander;
- Anbringen des zweidimensionalen Strichcodes an der aufgezeichneten Abbildung; und
- Anordnen des zweidimensionalen Strichcodes auf im Voraus definierte Weise in Bezug auf die aufgezeichnete Abbildung, wobei die aufgezeichnete Abbildung optional eingerahmt wird.

3. Verfahren nach einem der vorhergehenden Ansprüche, wobei jeder codierende Block außerdem eine Gesamtheit nicht codierender Unterblöcke enthält, deren Position im Voraus definiert ist, wobei das Verfahren außerdem für jeden codierenden Block die folgenden Schritte umfasst:
- Auswählen einer im Voraus definierten Gesamtheit codierende Unterblöcke,
- Codieren in einer Gesamtheit aus wenigstens einem im Voraus definierten nicht codierenden Unterblock des Ergebnisses der Anwendung eines Fehlerkorrekturcodes auf die Werte, die durch die im Voraus definierte Gesamtheit codierender Unterblöcke codiert werden.

4. Verfahren nach einem der vorhergehenden Ansprüche, das Folgendes umfasst:
- Digitalisieren der Quellabbildung, falls diese nicht bereits eine digitale Form hat; und
entweder:
- Zerlegen der digitalisierten Quellabbildung in eine Gesamtheit von Zonen, wobei jede Zone definiert ist durch:
- eine Basisfunktion, die durch einen Formerkennungsalgorithmus, einen biometrischen Erkennungsalgorithmus oder einen Farbgradienten bestimmt wird; oder
- einen Umrissdetektionsalgorithmus; oder
- Anwenden auf die Quellabbildung eines statischen geometrischen Gitters, das eine vorgegebene Form hat, optional jene eines Gesichts, wobei das Gitter eine Gesamtheit von Zonen enthält; und
- Zuordnen einer Farbe oder einer entsprechenden Farbinformation zu jeder Zone;
oder:
- Umsetzen der digitalisierten Quellabbildung, deren Abmessungen eventuell angepasst werden, in den Farbton-Sättigung-Wert-Raum, der eine Farbtonkomponente und eine Sättigungskomponente enthält; und
- Komprimieren der Farbinformationen der Quellabbildung in dem Farbtonraum und in dem Sättigungsraum durch:
- Zerlegen der Farbtonkomponente und der Sättigungskomponente in eine Gesamtheit entsprechender Zonen, wobei jede Zone einer homogenen Gesamtheit von Pixeln entspricht, deren Farbton bzw. Sättigung gleichmäßig ist; und
- Zuordnen eines Farbtons und einer entsprechenden Sättigung zu jeder Zone und Aufzeichnen des Farbtons und der Sättigung in einem Lexikon.

5. Verfahren nach einem der vorhergehenden Ansprüche, das wenigstens einen der folgenden Schritte umfasst:
- Hinzufügen von Daten, die in Bezug auf die Quellabbildung extrinsisch sind, zu dem digitalen Abdruck,
- Auswählen einer Anzahl von Attributen, die größer als ein in einem Speicher aufgezeichneter Schwellenwert sind, aus einer Gesamtheit berechneter Attribute; und
- Codieren wenigstens bestimmter Farbinformationen der Quellabbildung in Form von Metadaten des Strichcodes.

6. Verfahren nach einem der Ansprüche 3 bis 5, das für jeden Block wenigstens einen der folgenden Schritte umfasst:
- Anordnen der codierenden Unterblöcke und der nicht codierenden Unterblöcke in der Weise, dass:
o wenigstens eine Zeile des Blocks eine Gesamtheit codierender Unterblöcke enthält, die paarweise benachbart sind, wobei die Gesamtheit von einer Gesamtheit nicht codierender Unterblöcke umgeben ist, und
o wenigstens eine Spalte des Blocks eine Gesamtheit codierender Unterblöcke enthält, die paarweise benachbart sind, wobei die Gesamtheit von einer Gesamtheit nicht codierender Unterblöcke umgeben ist; und
- Anordnen der codierenden Unterblöcke und der nicht codierenden Unterblöcke in der Weise, dass:
o für wenigstens eine Spalte, die eine Gesamtheit codierender Unterblöcke enthält, jeder nicht codierende Unterblock der Spalte ein jeweiliges Ergebnis der Anwendung eines jeweiligen Fehlerkorrekturcodes auf Werte, die durch die Gesamtheit codierender Unterblöcke der Spalte codiert sind, codiert,
o für wenigstens eine Zeile, die eine Gesamtheit codierender Unterblöcke enthält, jeder nicht codierende Unterblöcke der Zeile ein jeweiliges Ergebnis der Anwendung eines jeweiligen Fehlerkorrekturcodes auf Werte, die durch die Gesamtheit codierender Unterblöcke der Zeile codiert sind, codiert.

7. Verfahren zum Authentifizierung einer Abbildung, die in Graustufen oder in Farbe aufgezeichnet ist und von einer farbigen Quellabbildung stammt, das die folgenden Schritte umfasst:
- Digitalisieren durch einen optischen Sensor:
o einer in Graustufen oder in Farbe aufgezeichneten Abbildung und
o eines zweidimensionalen Strichcodes, der gemäß einem Codierungsverfahren nach einem der vorhergehenden Ansprüche codiert ist und eine Nachricht sowie Metadaten codiert;
- Decodieren der Nachricht des zweidimensionalen Strichcodes und
- Vergleichen der decodierten Nachricht und der aufgezeichneten Abbildung.

8. Authentifizierungsverfahren nach Anspruch 7, das die folgenden Schritte umfasst:
- auf einer aufgezeichneten Abbildung, die durch den optischen Sensor gelesen wird:
o Definieren oder Identifizieren einer Gesamtheit hervorgehobener Punkte in der aufgezeichneten Abbildung, die durch den optischen Sensor gelesen wird,
o erneutes Berechnen einer Gesamtheit von Attributen als Funktion wenigstens bestimmter hervorgehobener Punkte der Gesamtheit,
o Auswählen aus der Gesamtheit erneut berechneter Attribute einer Gesamtheit aus wenigstens einem Attribut, das ermöglicht, einen digitalen Abdruck zu definieren,
- Vergleichen des Wertes der Differenz zwischen den decodierten Attributen des zweidimensionalen Strichcodes und den erneut berechneten Attributen mit einem vorgegebenen Schwellenwert, der in einem Speicher aufgezeichnet ist, und
- optional Verifizieren der kryptographischen Signatur.

9. Authentifizierungsverfahren nach einem der Ansprüche 7 oder 8, das außerdem die folgenden Schritte umfasst:
- Berechnen einer rekonstruierten Abbildung der Quellabbildung durch Extrahieren der Nachricht oder der Metadaten des zweidimensionalen Strichcodes und ausgehend von der extrahierten Nachricht oder den extrahierten Metadaten durch Befolgen einer der folgenden Schrittfolgen A, B, C oder D, die Folgendes umfassen:
A1. Identifizieren einer Gesamtheit von Basisfunktionen in den Metadaten,
A2. Anwenden jeder Basisfunktion auf die digitalisierte aufgezeichnete Abbildung, um jede Zone in der digitalisierten aufgezeichneten Abbildung erneut zu berechnen und um jede Zone mit ihrer zugeordneten jeweiligen Farbe einzufärben; und
A3. Vereinigen der erneut berechneten und eingefärbten Zonen mit der digitalisierten aufgezeichneten Abbildung; oder
B1. Definieren einer Gesamtheit von Zonen der digitalisierten aufgezeichneten Abbildung durch einen Umrissdetektionsalgorithmus;
B2. Herstellen einer eindeutigen Entsprechung zwischen jeder Zone der Quellabbildung und jeder Zone der digitalisierten aufgezeichneten Abbildung;
B3. Färben jeder Zone der digitalisierten aufgezeichneten Abbildung mit der Farbe der entsprechenden Zone der Quellabbildung, die aus den Metadaten extrahiert wird; oder
C1. Definieren einer Gesamtheit von Zonen der digitalisierten aufgezeichneten Abbildung durch Anwenden eines statischen geometrischen Gitters, das eine vorgegebene Form, optional jene eines Gesichts hat, auf die digitalisierte aufgezeichnete Abbildung;
C2. Herstellen einer eindeutigen Entsprechung zwischen jeder Zone der Quellabbildung und jeder Zone der digitalisierten aufgezeichneten Abbildung;
C3. Färben jeder Zone der digitalisierten aufgezeichneten Abbildung mit der Farbe der entsprechenden Zone der Quellabbildung, die aus den Metadaten extrahiert wird; oder
D1. Extrahieren eines Lexikons der Werte der Gesamtheit der Klassen in dem Farbtonraum und in dem Sättigungsraum,
D2. erneutes Zusammensetzen der Gesamtheit von Zonen des Farbtonraums und des Sättigungsraums durch Dekomprimieren des zweidimensionalen Strichcodes,
D3. optional Anpassen der Abmessungen der aufgezeichneten Abbildung in dem Sättigungsraum und in dem Farbtonraum an die Abmessungen der digitalisierten aufgezeichneten Abbildung,
D4. Rekonstruieren der Helligkeitskomponente anhand der digitalisierten aufgezeichneten Abbildung oder anhand der digitalisierten Quellabbildung,
D5. Berechnen der Helligkeits-, der Farbton- und der Sättigungskomponenten der rekonstruierten Abbildung durch Kombinieren der Gesamtheit der Zonen des Farbtonraums und des Sättigungsraums, die im Schritt D2 erneut zusammengesetzt werden, und der Helligkeitskomponente, die im Schritt D4 rekonstruiert wird,
D6. Umsetzen der Helligkeits-, der Farbton- und der Sättigungskomponenten in rote, grüne und blaue Werte und
- Anzeigen der rekonstruierten Abbildung auf einem Anzeigeschirm;
wobei das Verfahren optional außerdem einen Auffüllschritt umfasst, der darin besteht, vor dem Anzeigeschritt auf die rekonstruierte Abbildung einen Restaurierungsalgorithmus anzuwenden.

10. Computerprogramm, das Programmcodebefehle enthält, um die Schritte des Verfahrens nach einem der vorhergehenden Ansprüche auszuführen, wenn das Programm auf einem Computer ausgeführt wird.

## Claims

1. A method for encoding a source color illustration, comprising steps consisting in:
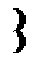 inscribing said source illustration in the form of an illustration inscribed in grayscale or in color,
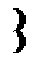 encoding a message in the form of a two-dimensional barcode comprising a set of blocks, each block coding a fragment of said message and comprising a set of (M) rows and (N) columns, and each block comprising a set of coding subblocks, each subblock comprising a set of bits;
**characterized in that** the encoding step comprises preliminary steps consisting in:
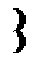 defining or identifying a set of distinctive points in the source illustration,
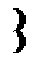 calculating a set of attributes according to at least some of the distinctive points of said set,
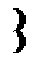 selecting, from among the set of calculated attributes, a set of at least one attribute making it possible to define a digital fingerprint,
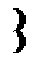 optionally compressing said digital fingerprint,
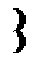 optionally signing said digital fingerprint by means of a cryptographic signature,
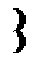 recording in the message one among:
- a set of at least one attribute,
- the digital fingerprint,
- the compressed digital fingerprint,
- the uncompressed signed digital fingerprint, and
- the compressed and signed digital fingerprint; the method furthermore comprising a step consisting in:
- encoding at least certain items of color information of the source illustration in said two-dimensional barcode.

2. The method as claimed in claim 1, furthermore comprising at least steps consisting in:
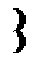 inscribing said two-dimensional barcode on a destination medium;
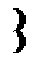 uniting said inscribed illustration and said destination medium;
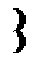 uniting the two-dimensional barcode with the inscribed illustration; and
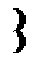 arranging the two-dimensional barcode in a predefined way with respect to the inscribed illustration, optionally by framing said inscribed illustration.

3. The method as claimed in either one of the preceding claims, wherein each coding block further comprises a set of non-coding subblocks the position of which is predefined, the method further comprising, for each coding block, steps consisting in:
- selecting a predefined set of coding subblocks,
- encoding on a set of at least one predefined non-coding subblock the result of applying an error-correcting code to the values encoded by said predefined set of coding subblocks.

4. The method as claimed in any one of the preceding claims, comprising:
- digitizing the source illustration if the latter is not already in digital form; and either:
- decomposing the digitized source illustration into a set of areas, each area being defined:
- by a primitive, determined by a shape recognition algorithm, a biometric recognition algorithm or a color gradient; or
- by an edge detection algorithm; or
- by applying to the source illustration a static geometric grid having a predetermined shape, optionally that of a face, the grid comprising a set of areas; and
- associating with each area a respective color or item of color information;
or:
- converting the, optionally redimensioned, digitized source illustration into the Hue Saturation Value space comprising a hue component and a saturation component; and
- compressing the items of color information of the source illustration in the hue space and in the saturation space by:
- decomposing said hue component and said saturation component into a set of respective areas, each area corresponding to a uniform set of pixels the hue and saturation of which, respectively, is uniform; and
- associating, with each area, a respective hue and saturation and recording them in a dictionary.

5. The method as claimed in any one of the preceding claims, comprising at least one of the steps among:
- adding to the digital fingerprint data extrinsic to the source illustration,
- selecting a number of attributes higher than a threshold value recorded in a memory among the set of calculated attributes; and
- encoding at least certain items of color information of the source illustration in the form of metadata of said barcode.

6. The method as claimed in any one of claims 3 to 5, comprising at least one of the steps consisting in, for each block:
- arranging the coding subblocks and non-coding subblocks so that:
o at least one row of the block comprises a set of two by two adjacent coding subblocks, said set being surrounded by a set of non-coding subblocks, and
o at least one column of the block comprises a set of two by two adjacent coding subblocks, said set being surrounded by a set of non-coding subblocks; and
- arranging the coding subblocks and non-coding subblocks so that:
o for at least one column comprising a set of coding subblocks, each non-coding subblock of said column encodes a respective result of applying a respective error-correcting code to the values encoded by said set of coding subblocks of said column,
o for at least one row comprising a set of coding subblocks, each non-coding subblock of said row encodes a respective result of applying a respective error-correcting code to the values encoded by said set of coding subblocks of said row.

7. A method for authenticating an illustration inscribed in grayscale or in color obtained from a source color illustration, comprising steps consisting in:
- digitizing with an optical sensor:
o an illustration inscribed in grayscale or in color, and
o a two-dimensional barcode encoded using an encoding method as claimed in any one of the preceding claims, and encoding a message and metadata;
- decoding the message of said two-dimensional barcode, and
- comparing the decoded message and the inscribed illustration.

8. The authenticating method as claimed in claim 7, comprising steps consisting in:
- in the inscribed illustration read by the optical sensor:
o defining or identifying a set of distinctive points in the inscribed illustration read by the optical sensor,
o recalculating a set of attributes depending on at least some of the distinctive points of said set,
o selecting, from among the set of recalculated attributes, a set of at least one attribute making it possible to define a digital fingerprint,
- comparing the value of the difference between the decoded attributes of said two-dimensional barcode and the recalculated attributes to a predetermined threshold value recorded in a memory, and
- optionally verifying the cryptographic signature.

9. The authenticating method as claimed in either of claims 7 and 8, further comprising steps consisting in:
- calculating a reconstructed illustration of the source illustration by extracting the message or metadata from said two-dimensional barcode and, on the basis of said extracted message or said extracted metadata, carrying out one of the sequences of steps A, B, C or D below, consisting in:
A1. identifying a set of primitives among said metadata,
A2. applying each primitive to the digitized inscribed illustration in order to recalculate each area of the digitized inscribed illustration and color each area with its associated respective color; and
A3. merging said recalculated colored areas and the digitized inscribed illustration; or
B1. defining a set of areas of the digitized inscribed illustration using an edge detection algorithm;
B2. establishing a unique correspondence between each area of the source illustration and each area of the digitized inscribed illustration;
B3. coloring each area of the digitized inscribed illustration with the color of the corresponding area of the source illustration extracted from the metadata; or
C1. defining a set of areas of the digitized inscribed illustration by applying a static geometric grid having a predetermined shape, optionally that of a face, to the digitized inscribed illustration;
C2. establishing a unique correspondence between each area of the source illustration and each area of the digitized inscribed illustration;
C3. coloring each area of the digitized inscribed illustration with the color of the corresponding area of the source illustration extracted from the metadata; or
D1. extracting from a dictionary the values of all of the classes in the hue space and in the saturation space,
D2. re-composing the set of areas of the hue space and of the saturation space by decompressing the two-dimensional barcode,
D3. optionally redimensioning the reconstructed illustration in the saturation space and in the hue space to the dimensions of the digitized inscribed illustration,
D4. reconstructing the brightness component on the basis of the digitized inscribed illustration, or on the basis of the digitized source illustration,
D5. calculating the brightness, hue and saturation components of the reconstructed illustration by combining all of the areas of the hue space and of the saturation space recomposed in step D2, and the brightness component reconstructed in step D4,
D6. converting the brightness, hue and saturation components into red green blue values, and
- displaying the reconstructed illustration on a display screen;
the method optionally furthermore comprising a filling in step consisting in applying a restoration algorithm to the reconstructed illustration prior to the displaying step.

10. A computer program comprising program code instructions for executing the steps of the method as claimed in any one of the preceding claims, when said program is executed on a computer.
